(19) **Europäisches Patentamt / European Patent Office / Office européen des brevets**

(11) **EP 4 750 195 A1**

(12) **EUROPEAN PATENT APPLICATION**
published in accordance with Art. 153(4) EPC

(43) Date of publication:
**27.05.2026 Bulletin 2026/22**

(21) Application number: **24853674.0**

(22) Date of filing: **09.08.2024**

(51) International Patent Classification (IPC):
**H04W 72/0446** (2023.01)

(52) Cooperative Patent Classification (CPC):
**H04L 5/14; H04W 72/0446; H04W 72/1268; H04W 72/23**

(86) International application number:
**PCT/CN2024/110897**

(87) International publication number:
**WO 2025/036264 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311019855**

(71) Applicant: HUAWEI TECHNOLOGIES CO., LTD.
**Shenzhen 518129 (CN)**

(72) Inventors:
• **HOU, Hailong**
  **Shenzhen, Guangdong 518129 (CN)**
• **GUO, Zhiheng**
  **Shenzhen, Guangdong 518129 (CN)**
• **LU, Shaozhong**
  **Shenzhen, Guangdong 518129 (CN)**
• **SONG, Xinghua**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS, AND READABLE STORAGE MEDIUM**

(57) This application relates to the field of communication technologies, and in particular, to a communication method and apparatus, and a readable storage medium. The method includes: sending a first message, where the first message indicates one or more first-type PUCCH resource sets and one or more second-type PUCCH resource sets, one or more first-type PUCCH resources included in the one or more first-type PUCCH resource sets are used to receive UCI in an SBFD time unit, and one or more second-type PUCCH resources included in the one or more second-type PUCCH resource sets are used to receive UCI in a non-SBFD time unit; and receiving, on a first PUCCH resource and/or a second PUCCH resource, first UCI sent by a terminal device. In embodiments of this application, dedicated PUCCH resources may be configured for different time units respectively, to provide a basis for improving transmission performance of a PUCCH in an SBFD time unit.

Network device — UE

S601: Send a first message, where the first message indicates one or more first-type PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit

S602: Receive first UCI on a first PUCCH resource in the one or more first-type PUCCH resources and/or a second PUCCH resource in the one or more second-type PUCCH resources

FIG. 6a

## Description

This application claims priority to Chinese Patent Application No. 202311019855.4, filed with the China National Intellectual Property Administration on August 11, 2023 and entitled "COMMUNICATION METHOD AND APPARATUS, AND READABLE STORAGE MEDIUM", which is incorporated herein by reference in its entirety.

## TECHNICAL FIELD

This application relates to the field of communication technologies, and in particular, to a communication method and apparatus, and a readable storage medium.

## BACKGROUND

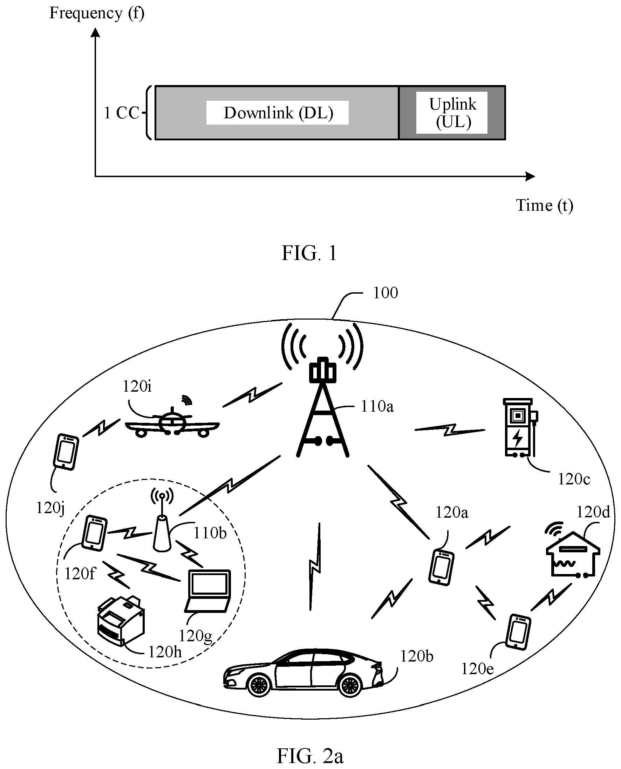

In a time division duplex (time division duplexing, TDD) system, a downlink (downlink, DL) usually occupies main time resources, as shown in FIG. 1. This causes coverage imbalance between a DL and an uplink (uplink, UL). Compared with a frequency division duplex (frequency division duplexing, FDD) system, uplink coverage of the TDD system is poor and a delay is high. Subband full duplex (subband full duplex, SBFD) proposed in the industry can resolve these problems in the TDD system. Most companies support a solution of "subband full duplex on a network device side and half duplex on a terminal device side". To be specific, a network device may simultaneously perform sending and receiving on one symbol, and a terminal device can perform only receiving or sending on one symbol, and cannot simultaneously perform receiving and sending on one symbol. In this way, uplink transmission resources available to the terminal device increase, so that UL coverage can be effectively increased, and a UL delay can be reduced.

In a wireless communication system, uplink L1/L2 control signaling, also referred to as uplink control information (uplink control information, UCI), is usually used to support data transmission on uplink and downlink transmission channels. In an existing protocol, the UCI is mainly transmitted on a physical uplink control channel (physical uplink control channel, PUCCH), and a PUCCH resource used to transmit the UCI may be configured by the network device. In a scenario in which SBFD is introduced, the network device also needs to configure the PUCCH resource to transmit the UCI, to ensure normal transmission of data on uplink and downlink transmission channels.

Currently, in the scenario in which SBFD is introduced, a configuration solution for the PUCCH resource is still being explored.

## SUMMARY

Embodiments of this application provide a communication method and apparatus, and a readable storage medium, to improve PUCCH resource allocation flexibility.

The following describes this application from different aspects. It should be understood that the following implementations and beneficial effects of different aspects may be mutually referenced.

According to a first aspect, this application provides a communication method, applied to a network device, where the method includes: sending a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and

receiving, on a first PUCCH resource in the one or more first-type PUCCH resources and/or a second PUCCH resource in the one or more second-type PUCCH resources, first UCI sent by the terminal device.

In this embodiment of this application, the network device may configure dedicated PUCCH resources for an SBFD time unit and a non-SBFD time unit respectively, which is different from a solution in which only one set of PUCCH resources is configured for all uplink slots in a current TDD system so that only resources in a same resource set can be used for UCI transmission in all the slots. In this application, PUCCH resources are configured for two different types of time units respectively, so that PUCCH resource allocation flexibility can be improved, and a basis is provided for improving transmission performance of a PUCCH in the SBFD time unit.

According to a second aspect, this application provides a communication method, applied to a network device, where the method includes: sending a first message to a terminal device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and

receiving, on a first PUCCH resource in the one or more first-type PUCCH resources and/or a second PUCCH resource in the one or more second-type PUCCH resources, first UCI sent by the terminal device.

In this embodiment of this application, the network device may configure dedicated PUCCH resources for an SBFD time unit and a non-SBFD time unit respectively at a granularity of a PUCCH resource.

With reference to the second aspect, in a possible implementation, the method further includes: sending a second message to the terminal device, where the second message indicates one or more first-type physical uplink control channel PUCCH resource sets and one or more second-type PUCCH resource sets, any PUCCH resource set in the one or more first-type PUCCH resource sets includes one or more PUCCH resources in the one or more first-type PUCCH resources, and any PUCCH resource set in the one or more second-type PUCCH resource sets includes one or more PUCCH resources in the one or more second-type PUCCH resources.

According to a third aspect, this application provides a communication method, applied to a network device, where the method includes: sending a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit; and

receiving, on a first PUCCH resource in the one or more first-type PUCCH resources and/or a second PUCCH resource in the one or more second-type PUCCH resources, first UCI sent by the terminal device.

In this embodiment of this application, the network device may configure dedicated PUCCH resources for an SBFD time unit and a non-SBFD time unit respectively at a granularity of a PUCCH resource set. In addition, during configuration, the network device may implicitly indicate, by indicating a purpose of the PUCCH resource set, a purpose of a PUCCH resource included in the PUCCH resource set.

With reference to the first aspect, the second aspect, or the third aspect, in a possible implementation, the method further includes: receiving, on the first PUCCH resource corresponding to the SBFD time unit, the first UCI repeatedly transmitted by the terminal device N times, where the first PUCCH resource belongs to the one or more first-type PUCCH resources; and

receiving, on the second PUCCH resource corresponding to the non-SBFD time unit, the first UCI repeatedly transmitted by the terminal device M times, where the second PUCCH resource belongs to the one or more second-type PUCCH resources, and both M and N are integers greater than 0.

In this embodiment of this application, same UCI can be allowed to be repeatedly transmitted across an SBFD time unit (symbol/slot) and a non-SBFD time unit (symbol/slot) on a PUCCH resource, to improve transmission performance of a PUCCH and a UCI transmission success rate, and reduce a UCI transmission delay.

With reference to the first aspect, the second aspect, or the third aspect, in a possible implementation, the method further includes:

receiving the first UCI on the first PUCCH resource in a first PUCCH resource set, where the first PUCCH resource set belongs to the one or more first-type PUCCH resource sets; and

receiving the first UCI on the second PUCCH resource in a second PUCCH resource set, where the second PUCCH resource set belongs to the one or more second-type PUCCH resource sets.

With reference to the first aspect, the second aspect, or the third aspect, in a possible implementation, the method further includes:

sending downlink control information DCI, where the DCI includes a first PUCCH resource indicator field, and the first PUCCH resource indicator field is for determining the first PUCCH resource and the second PUCCH resource.

In this embodiment of this application, the network device may deliver one indicator field by using DCI, so that a UE can determine, based on the indicator field, PUCCH resources used to transmit UCI in the SBFD time unit and the non-SBFD time unit.

With reference to the first aspect, the second aspect, or the third aspect, in a possible implementation, the method further includes:

sending downlink control information DCI, where the DCI includes a first PUCCH resource indicator field and a second PUCCH indicator field, the first PUCCH resource indicator field is for determining the first PUCCH resource, and the second PUCCH resource indicator field is for determining the second PUCCH resource.

In this embodiment of this application, the network device may deliver two indicator fields by using DCI, so that a UE can determine, based on the two indicator fields, PUCCH resources used to transmit UCI in the SBFD time unit and the non-SBFD time unit respectively.

With reference to the first aspect, the second aspect, or the third aspect, in a possible implementation, the method further includes:

sending a seventh message, where the seventh message indicates the first PUCCH resource and the second PUCCH resource, and the seventh message indicates the terminal device to transmit the first UCI on the first PUCCH resource and the second PUCCH resource.

In this embodiment of this application, the network device may deliver a message, to directly indicate, to a UE, PUCCH resources used to transmit UCI in the SBFD time unit and the non-SBFD time unit.

With reference to the first aspect, the second aspect, or the third aspect, in a possible implementation, the method further includes:

sending a third message, where the third message indicates a reference signal associated with the first PUCCH resource and a reference signal associated with the second PUCCH resource.

In this embodiment of this application, the network device may configure, by using one piece of signaling, reference signals associated with PUCCH transmission in different types of time units.

With reference to the first aspect, the second aspect, or the third aspect, in a possible implementation, the method further includes:

sending a third message and a fourth message, where the third message indicates a reference signal associated with the first PUCCH resource, and the fourth message indicates a reference signal associated with the second PUCCH resource.

In this embodiment of this application, spatial relationship information (or transmission configuration indicator state information, for example, a reference signal) associated with PUCCH transmission for different time unit types may be separately configured, so that a PUCCH in the SBFD time unit can be transmitted via a more appropriate beam, to improve transmission performance of the PUCCH.

According to a fourth aspect, this application provides a communication method, applied to a terminal device, where the method includes: receiving a first message from a network device, where the first message indicates one or more first-type PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used to send uplink control information UCI in a subband full duplex SBFD time unit, and the one or more second-type PUCCH resources are used to send UCI in a non-subband full duplex non-SBFD time unit; and

sending first UCI on a first PUCCH resource in the one or more first-type PUCCH resources and/or a second PUCCH resource in the one or more second-type PUCCH resource sets.

According to a fifth aspect, this application provides a communication method, applied to a terminal device, where the method includes: receiving a first message from a network device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and

sending first UCI on a first PUCCH resource in the one or more first-type PUCCH resources and/or a second PUCCH resource in the one or more second-type PUCCH resource sets.

With reference to the fifth aspect, in a possible implementation, the method further includes:

receiving a second message from the network device, where the second message indicates one or more first-type physical uplink control channel PUCCH resource sets and one or more second-type PUCCH resource sets, any PUCCH resource set in the one or more first-type PUCCH resource sets includes one or more PUCCH resources in the one or more first-type PUCCH resources, and any PUCCH resource set in the one or more second-type PUCCH resource sets includes one or more PUCCH resources in the one or more second-type PUCCH resources.

According to a sixth aspect, this application provides a communication method, applied to a terminal device, where the method includes: receiving a first message from a network device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit; and

sending first UCI on a first PUCCH resource in the one or more first-type PUCCH resources and/or a second PUCCH resource in the one or more second-type PUCCH resource sets.

With reference to the fourth aspect, the fifth aspect, or the sixth aspect, in a possible implementation, the method further includes:

repeatedly transmitting the first UCI N times on the first PUCCH resource corresponding to the SBFD time unit, where the first PUCCH resource belongs to the one or more first-type PUCCH resources; and
repeatedly transmit the first UCI M times on the second PUCCH resource corresponding to the non-SBFD time unit, where the second PUCCH resource belongs to the one or more second-type PUCCH resources, and both M and N are integers greater than 0.

With reference to the fourth aspect, the fifth aspect, or the sixth aspect, in a possible implementation, the first UCI includes hybrid automatic repeat-acknowledgment HARQ-RACK information, and the method further includes:

determining a first PUCCH resource set based on a number of bits of the first UCI, where the first PUCCH resource set belongs to the one or more first-type PUCCH resource sets, and the first PUCCH resource belongs to the first PUCCH resource set; and
determining a second PUCCH resource set based on the number of bits of the first UCI, where the second PUCCH resource set belongs to the one or more second-type PUCCH resource sets, and the second PUCCH resource belongs to the second PUCCH resource set.

In this embodiment of this application, a UE may determine, based on a number of bits of to-be-transmitted UCI, available PUCCH resource sets in an SBFD time unit and a non-SBFD time unit respectively.
With reference to the fourth aspect, the fifth aspect, or the sixth aspect, in a possible implementation, the method further includes:
determining the first PUCCH resource in the first PUCCH resource set based on a first PUCCH resource indicator field in downlink control information DCI sent by the network device, and determining the second PUCCH resource in the second PUCCH resource set, where the first PUCCH resource set belongs to the one or more first-type PUCCH resource sets, and the second PUCCH resource set belongs to the one or more second-type PUCCH resource sets.
In this embodiment of this application, the UE may determine, based on one indicator field in DCI delivered by the network device, PUCCH resources used in the SBFD time unit and the non-SBFD time unit respectively.
With reference to the fourth aspect, the fifth aspect, or the sixth aspect, in a possible implementation, the method further includes:

determining the first PUCCH resource in the first PUCCH resource set based on a first PUCCH resource indicator field in DCI sent by the network device, where the first PUCCH resource set belongs to the one or more first-type PUCCH resource sets; and
determining the second PUCCH resource in the second PUCCH resource set based on a second PUCCH resource indicator field in the DCI, where the second PUCCH resource set belongs to the one or more second-type PUCCH resource sets.

In this embodiment of this application, the UE may determine, based on two indicator fields in DCI delivered by the network device, PUCCH resources used in the SBFD time unit and the non-SBFD time unit respectively.
With reference to the fourth aspect, the fifth aspect, or the sixth aspect, in a possible implementation, the method further includes:
receiving a seventh message sent by the network device, where the seventh message indicates the first PUCCH resource and the second PUCCH resource, and the seventh message indicates the terminal device to transmit the first UCI on the first PUCCH resource and the second PUCCH resource.
With reference to the fourth aspect, the fifth aspect, or the sixth aspect, in a possible implementation, the method further includes: receiving a third message sent by the network device, where the third message indicates a reference signal associated with the first PUCCH resource and a reference signal associated with the second PUCCH resource.
With reference to the fourth aspect, the fifth aspect, or the sixth aspect, in a possible implementation, the method further includes: receiving a third message and a fourth message that are sent by the network device, where the third message indicates a reference signal associated with the first PUCCH resource, and the fourth message indicates a reference signal associated with the second PUCCH resource.
With reference to the first aspect, the second aspect, the third aspect, the fourth aspect, the fifth aspect, or the sixth aspect, in a possible implementation, the reference signal associated with the first PUCCH resource is the same as a reference signal associated with a first physical downlink control channel PDCCH that is received by the terminal device in an SBFD time unit, and the first PDCCH is received by the terminal device in a control resource set CORESET with a smallest index value in an active downlink bandwidth part BWP corresponding to the SBFD time unit; and
the reference signal associated with the second PUCCH resource is the same as a reference signal associated with a second PDCCH that is received by the terminal device in a non-SBFD time unit, and the second PDCCH is received by the terminal device in a CORESET with a smallest index value in an active downlink BWP corresponding to the non-SBFD time unit.

With reference to the first aspect, the second aspect, the third aspect, the fourth aspect, the fifth aspect, or the sixth aspect, in a possible implementation, a frequency range associated with the SBFD time unit includes one or more uplink subbands and one or more downlink subbands, the uplink subband is used for uplink transmission, the downlink subband is used for downlink transmission, and a frequency range associated with the non-SBFD time unit is used for uplink transmission or downlink transmission.

With reference to the first aspect, the second aspect, the third aspect, the fourth aspect, the fifth aspect, or the sixth aspect, in a possible implementation, a frequency domain resource of each PUCCH resource in the one or more first-type PUCCH resources is within a frequency range of an uplink subband associated with the SBFD time unit.

In this embodiment of this application, the frequency domain resource of each of the PUCCH resources configured for the SBFD time unit is within the frequency range of the uplink subband associated with the SBFD time unit, to avoid a problem that the PUCCH resource cannot be used for sending in the SBFD time unit because the frequency resource falls outside the range of the uplink subband.

With reference to the first aspect, the second aspect, the third aspect, the fourth aspect, the fifth aspect, or the sixth aspect, in a possible implementation, the first PUCCH resource meets any one or more of the following conditions:

a time domain resource length of the first PUCCH resource is greater than a time domain resource length of the second PUCCH resource;
a frequency domain resource width of the first PUCCH resource is greater than a frequency domain resource width of the second PUCCH resource;
a maximum coding rate of the first PUCCH resource is less than a maximum coding rate of the second PUCCH resource; or
a number of demodulation reference signal DMRS symbols of the first PUCCH resource is greater than a number of DMRS symbols of the second PUCCH resource.

According to a seventh aspect, this application provides a communication method, applied to a network device, where the method includes: sending a fifth message to a terminal device, where the fifth message indicates one or more PUCCH resources, and the one or more PUCCH resources are used to send UCI in an SBFD time unit and a non-SBFD time unit;

receiving, in the SBFD time unit on a third PUCCH resource, second UCI repeatedly transmitted by the terminal device N times; and
receiving, in the non-SBFD time unit on the third PUCCH resource, the second UCI repeatedly transmitted by the terminal device M times, where
the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

With reference to the seventh aspect, in a possible implementation, the method further includes:
sending a sixth message, where the sixth message indicates a spatial relationship corresponding to the third PUCCH resource in the SBFD time unit and a spatial relationship corresponding to the third PUCCH resource in the non-SBFD time unit.

With reference to the seventh aspect, in a possible implementation, the method further includes:
sending an eighth message, where the eighth message indicates one or more PUCCH resource sets, and any one of the one or more PUCCH resource sets includes one or more of the one or more PUCCH resources.

According to an eighth aspect, this application provides a communication method, applied to a terminal device, where the method includes: receiving a fifth message from a network device, where the fifth message indicates one or more PUCCH resources, and the one or more PUCCH resources are used to send UCI in an SBFD time unit and a non-SBFD time unit;

repeatedly transmitting second UCI N times in the SBFD time unit on a third PUCCH resource; and
repeatedly transmitting the second UCI M times in the non-SBFD time unit on the third PUCCH resource, where
the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

With reference to the eighth aspect, in a possible implementation, the method further includes:

receiving a sixth message, where the sixth message indicates spatial relationship information corresponding to the third PUCCH resource in the SBFD time unit and spatial relationship information corresponding to the third PUCCH resource in the non-SBFD time unit.

With reference to the eighth aspect, in a possible implementation, the method further includes:

receiving an eighth message, where the eighth message indicates one or more PUCCH resource sets, and any one of the one or more PUCCH resource sets includes one or more of the one or more PUCCH resources.

According to a ninth aspect, this application provides a communication apparatus. The apparatus includes: a sending unit, configured to send a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and a receiving unit, configured to receive, on a first PUCCH resource in the one or more first-type PUCCH resources and/or a second PUCCH resource in the one or more second-type PUCCH resources, first UCI sent by the terminal device.

According to a tenth aspect, this application provides a communication apparatus. The apparatus includes: a sending unit, configured to send a first message to a terminal device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and

a receiving unit, configured to receive, on a first PUCCH resource in the one or more first-type PUCCH resources and/or a second PUCCH resource in the one or more second-type PUCCH resources, first UCI sent by the terminal device.

With reference to the tenth aspect, in a possible implementation, the sending unit is further configured to send a second message to the terminal device, where the second message indicates one or more first-type physical uplink control channel PUCCH resource sets and one or more second-type PUCCH resource sets, any PUCCH resource set in the one or more first-type PUCCH resource sets includes one or more PUCCH resources in the one or more first-type PUCCH resources, and any PUCCH resource set in the one or more second-type PUCCH resource sets includes one or more PUCCH resources in the one or more second-type PUCCH resources.

According to an eleventh aspect, this application provides a communication apparatus. The apparatus includes: a sending unit, configured to send a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit; and

a receiving unit, configured to receive, on a first PUCCH resource in the one or more first-type PUCCH resources and/or a second PUCCH resource in the one or more second-type PUCCH resources, first UCI sent by the terminal device.

With reference to the ninth aspect, the tenth aspect, or the eleventh aspect, in a possible implementation, the receiving unit is further configured to receive, on the first PUCCH resource corresponding to the SBFD time unit, the first UCI repeatedly transmitted by the terminal device N times, where the first PUCCH resource belongs to the one or more first-type PUCCH resources; and

receive, on the second PUCCH resource corresponding to the non-SBFD time unit, the first UCI repeatedly transmitted by the terminal device M times, where the second PUCCH resource belongs to the one or more second-type PUCCH resources, and both M and N are integers greater than 0.

With reference to the ninth aspect, the tenth aspect, or the eleventh aspect, in a possible implementation, the receiving unit is further configured to receive the first UCI on the first PUCCH resource in a first PUCCH resource set, where the first PUCCH resource set belongs to the one or more first-type PUCCH resource sets; and

receive the first UCI on the second PUCCH resource in a second PUCCH resource set, where the second PUCCH resource set belongs to the one or more second-type PUCCH resource sets.

With reference to the ninth aspect, the tenth aspect, or the eleventh aspect, in a possible implementation, the sending unit is further configured to send downlink control information DCI, where the DCI includes a first PUCCH resource indicator field, and the first PUCCH resource indicator field is for determining the first PUCCH resource and the second PUCCH resource.

With reference to the ninth aspect, the tenth aspect, or the eleventh aspect, in a possible implementation, the sending unit is further configured to send downlink control information DCI, where the DCI includes a first PUCCH resource indicator field and a second PUCCH indicator field, the first PUCCH resource indicator field is for determining the first PUCCH resource, and the second PUCCH resource indicator field is for determining the second PUCCH resource.

With reference to the ninth aspect, the tenth aspect, or the eleventh aspect, in a possible implementation, the sending unit is further configured to send a seventh message, where the seventh message indicates the first PUCCH resource and the second PUCCH resource, and the seventh message indicates the terminal device to transmit the first UCI on the first PUCCH resource and the second PUCCH resource.

With reference to the ninth aspect, the tenth aspect, or the eleventh aspect, in a possible implementation, the sending unit is further configured to send a third message, where the third message indicates a reference signal associated with the first PUCCH resource and a reference signal associated with the second PUCCH resource.

With reference to the ninth aspect, the tenth aspect, or the eleventh aspect, in a possible implementation, the sending unit is further configured to send a third message and a fourth message, where the third message indicates a reference signal associated with the first PUCCH resource, and the fourth message indicates a reference signal associated with the second PUCCH resource.

According to a twelfth aspect, this application provides a communication apparatus. The apparatus includes: a receiving unit, configured to receive a first message from a network device, where the first message indicates one or more first-type PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used to send uplink control information UCI in a subband full duplex SBFD time unit, and the one or more second-type PUCCH resources are used to send UCI in a non-subband full duplex non-SBFD time unit; and
a sending unit, configured to send first UCI on a first PUCCH resource in the one or more first-type PUCCH resources and/or a second PUCCH resource in the one or more second-type PUCCH resource sets.

According to a thirteenth aspect, this application provides a communication apparatus. The apparatus includes: a receiving unit, configured to receive a first message from a network device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and
a sending unit, configured to send first UCI on a first PUCCH resource in the one or more first-type PUCCH resources and/or a second PUCCH resource in the one or more second-type PUCCH resource sets.

With reference to the thirteenth aspect, in a possible implementation, the receiving unit is further configured to receive a second message from the network device, where the second message indicates one or more first-type physical uplink control channel PUCCH resource sets and one or more second-type PUCCH resource sets, any PUCCH resource set in the one or more first-type PUCCH resource sets includes one or more PUCCH resources in the one or more first-type PUCCH resources, and any PUCCH resource set in the one or more second-type PUCCH resource sets includes one or more PUCCH resources in the one or more second-type PUCCH resources.

According to a fourteenth aspect, this application provides a communication apparatus. The apparatus includes: a receiving unit, configured to receive a first message from a network device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit; and
a sending unit, configured to send first UCI on a first PUCCH resource in the one or more first-type PUCCH resources and/or a second PUCCH resource in the one or more second-type PUCCH resource sets.

With reference to the twelfth aspect, the thirteenth aspect, or the fourteenth aspect, in a possible implementation, the sending unit is further configured to repeatedly transmit the first UCI N times on the first PUCCH resource corresponding to the SBFD time unit, where the first PUCCH resource belongs to the one or more first-type PUCCH resources; and
repeatedly transmit the first UCI M times on the second PUCCH resource corresponding to the non-SBFD time unit, where the second PUCCH resource belongs to the one or more second-type PUCCH resources, and both M and N are integers greater than 0.

With reference to the twelfth aspect, the thirteenth aspect, or the fourteenth aspect, in a possible implementation, the first UCI includes hybrid automatic repeat-acknowledgment HARQ-RACK information, and the apparatus further includes:

a processing unit, configured to determine a first PUCCH resource set based on a number of bits of the first UCI, where the first PUCCH resource set belongs to the one or more first-type PUCCH resource sets, and the first PUCCH resource belongs to the first PUCCH resource set; and

determine a second PUCCH resource set based on the number of bits of the first UCI, where the second PUCCH resource set belongs to the one or more second-type PUCCH resource sets, and the second PUCCH resource belongs to the second PUCCH resource set.

With reference to the twelfth aspect, the thirteenth aspect, or the fourteenth aspect, in a possible implementation, the apparatus further includes:

a processing unit, configured to determine the first PUCCH resource in the first PUCCH resource set based on a first PUCCH resource indicator field in downlink control information DCI sent by the network device, and determine the second PUCCH resource in the second PUCCH resource set, where the first PUCCH resource set belongs to the one or more first-type PUCCH resource sets, and the second PUCCH resource set belongs to the one or more second-type PUCCH resource sets.

With reference to the twelfth aspect, the thirteenth aspect, or the fourteenth aspect, in a possible implementation, the apparatus further includes:

a processing unit, configured to determine the first PUCCH resource in the first PUCCH resource set based on a first PUCCH resource indicator field in DCI sent by the network device, where the first PUCCH resource set belongs to the one or more first-type PUCCH resource sets; and

determine the second PUCCH resource in the second PUCCH resource set based on a second PUCCH resource indicator field in the DCI, where the second PUCCH resource set belongs to the one or more second-type PUCCH resource sets.

With reference to the twelfth aspect, the thirteenth aspect, or the fourteenth aspect, in a possible implementation, the receiving unit is further configured to receive a seventh message sent by the network device, where the seventh message indicates the first PUCCH resource and the second PUCCH resource, and the seventh message indicates the terminal device to transmit the first UCI on the first PUCCH resource and the second PUCCH resource.

With reference to the twelfth aspect, the thirteenth aspect, or the fourteenth aspect, in a possible implementation, the receiving unit is further configured to receive a third message sent by the network device, where the third message indicates a reference signal associated with the first PUCCH resource and a reference signal associated with the second PUCCH resource.

With reference to the twelfth aspect, the thirteenth aspect, or the fourteenth aspect, in a possible implementation, the receiving unit is further configured to receive a third message and a fourth message that are sent by the network device, where the third message indicates a reference signal associated with the first PUCCH resource, and the fourth message indicates a reference signal associated with the second PUCCH resource.

With reference to the ninth aspect, the tenth aspect, the eleventh aspect, the twelfth aspect, the thirteenth aspect, or the fourteenth aspect, in a possible implementation, the reference signal associated with the first PUCCH resource is the same as a reference signal associated with a first physical downlink control channel PDCCH that is received by the terminal device in an SBFD time unit, and the first PDCCH is received by the terminal device in a control resource set CORESET with a smallest index value in an active downlink bandwidth part BWP corresponding to the SBFD time unit; and the reference signal associated with the second PUCCH resource is the same as a reference signal associated with a second PDCCH that is received by the terminal device in a non-SBFD time unit, and the second PDCCH is received by the terminal device in a CORESET with a smallest index value in an active downlink BWP corresponding to the non-SBFD time unit.

With reference to the ninth aspect, the tenth aspect, the eleventh aspect, the twelfth aspect, the thirteenth aspect, or the fourteenth aspect, in a possible implementation, a frequency range associated with the SBFD time unit includes one or more uplink subbands and one or more downlink subbands, the uplink subband is used for uplink transmission, the downlink subband is used for downlink transmission, and a frequency range associated with the non-SBFD time unit is used for uplink transmission or downlink transmission.

With reference to the ninth aspect, the tenth aspect, the eleventh aspect, the twelfth aspect, the thirteenth aspect, or the fourteenth aspect, in a possible implementation, a frequency domain resource of each PUCCH resource in the one or more first-type PUCCH resources is within a frequency range of an uplink subband associated with the SBFD time unit.

With reference to the ninth aspect, the tenth aspect, the eleventh aspect, the twelfth aspect, the thirteenth aspect, or the fourteenth aspect, in a possible implementation, the first PUCCH resource meets any one or more of the following conditions:

a time domain resource length of the first PUCCH resource is greater than a time domain resource length of the second PUCCH resource;

a frequency domain resource width of the first PUCCH resource is greater than a frequency domain resource width of the second PUCCH resource;

a maximum coding rate of the first PUCCH resource is less than a maximum coding rate of the second PUCCH resource; or

a number of demodulation reference signal DMRS symbols of the first PUCCH resource is greater than a number of DMRS symbols of the second PUCCH resource.

According to a fifteenth aspect, this application provides a communication apparatus. The apparatus includes: a sending unit, configured to send a fifth message to a terminal device, where the fifth message indicates one or more PUCCH resources, and the one or more PUCCH resources are used to send UCI in an SBFD time unit and a non-SBFD time unit; and

a receiving unit, configured to receive, in the SBFD time unit on a third PUCCH resource, second UCI repeatedly transmitted by the terminal device N times.

The receiving unit is further configured to receive, in the non-SBFD time unit on the third PUCCH resource, the second UCI repeatedly transmitted by the terminal device M times, where

the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

With reference to the fifteenth aspect, in a possible implementation, the sending unit is further configured to send a sixth message, where the sixth message indicates a spatial relationship corresponding to the third PUCCH resource in the SBFD time unit and a spatial relationship corresponding to the third PUCCH resource in the non-SBFD time unit.

With reference to the fifteenth aspect, in a possible implementation, the sending unit is further configured to send an eighth message, where the eighth message indicates one or more PUCCH resource sets, and any one of the one or more PUCCH resource sets includes one or more of the one or more PUCCH resources.

According to a sixteenth aspect, this application provides a communication apparatus. The apparatus includes: a receiving unit, configured to receive a fifth message from a network device, where the fifth message indicates one or more PUCCH resources, and the one or more PUCCH resources are used to send UCI in an SBFD time unit and a non-SBFD time unit; and

a sending unit, configured to repeatedly transmit second UCI N times in the SBFD time unit on a third PUCCH resource.

The sending unit is further configured to repeatedly transmit the second UCI M times in the non-SBFD time unit on the third PUCCH resource, where

the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

With reference to the sixteenth aspect, in a possible implementation, the receiving unit is further configured to receive a sixth message, where the sixth message indicates spatial relationship information corresponding to the third PUCCH resource in the SBFD time unit and spatial relationship information corresponding to the third PUCCH resource in the non-SBFD time unit.

With reference to the sixteenth aspect, in a possible implementation, the receiving unit is further configured to receive an eighth message, where the eighth message indicates one or more PUCCH resource sets, and any one of the one or more PUCCH resource sets includes one or more of the one or more PUCCH resources.

According to a seventeenth aspect, this application provides a communication apparatus. The communication apparatus may include a processor, a transceiver, and a memory. The memory is configured to store a computer program. The transceiver is configured to receive and send various messages. The computer program includes program instructions. When the processor runs the program instructions, the communication apparatus is enabled to perform the method described in any one of the first aspect to the eighth aspect or any possible implementation in any one of the first aspect to the eighth aspect. The transceiver may be a radio frequency module in the communication apparatus, a combination of a radio frequency module and an antenna, or an input/output interface of a chip or a circuit.

According to an eighteenth aspect, this application provides a computer-readable storage medium. The computer-readable storage medium stores program instructions. When the program instructions are run on a computer, the computer is enabled to perform the method described in any one of the first aspect to the eighth aspect or any possible implementation in any one of the first aspect to the eighth aspect.

According to a nineteenth aspect, this application provides a program product including program instructions. When the program product runs, the method described in any one of the first aspect to the eighth aspect or any possible implementation in any one of the first aspect to the eighth aspect is performed.

According to a twentieth aspect, this application provides a communication apparatus. The communication apparatus may be implemented in a form of a chip, or may be implemented in a form of a device. The apparatus includes a processor. The processor is configured to read and execute a program stored in a memory, to perform the communication method provided in any one of the first aspect to the eighth aspect or any one or more of the possible implementations in any one of the first aspect to the eighth aspect. Optionally, the communication apparatus further includes the memory, and the memory is connected to the processor through a circuit. Further optionally, the communication apparatus further includes a communication interface, and the processor is connected to the communication interface. The communication interface is configured to receive a to-be-processed data packet and/or to-be-processed information. The processor obtains the data packet and/or the information from the communication interface, processes the data packet and/or the information, and outputs a processing result through the communication interface. The communication interface may be an input/output interface.

Optionally, the processor and the memory may be physically mutually independent units, or the memory may be integrated with the processor.

According to a twenty-first aspect, this application provides a wireless communication system. The wireless communication system includes a terminal device and a network device. The network device is configured to perform the method described in the first aspect, the second aspect, the third aspect, the seventh aspect, or any possible implementation in any one of the aspects. The terminal device is configured to perform the method described in the fourth aspect, the fifth aspect, the sixth aspect, the eighth aspect, or any possible implementation in any one of the aspects.

For technical effects achieved in the foregoing aspects, mutual reference may be made, or reference may be made to beneficial effects in the following method embodiments. Details are not described herein.

## BRIEF DESCRIPTION OF DRAWINGS

To describe the technical solutions in embodiments of this application or in the background more clearly, the following describes the accompanying drawings for describing embodiments of this application or the background.

FIG. 1 is a diagram of uplink and downlink coverage of a TDD system in a conventional technology;
FIG. 2a is a diagram of an architecture of a communication system according to an embodiment of this application;
FIG. 2b is a diagram of a sidelink UE-to-network relay scenario according to an embodiment of this application;
FIG. 2c is a diagram of a sidelink UE-to-UE relay scenario according to an embodiment of this application;
FIG. 2d is a diagram of an architecture of another communication system according to an embodiment of this application;
FIG. 3 is a simplified diagram of structures of a UE and a base station according to an embodiment of this application;
FIG. 4 is a diagram of uplink and downlink coverage of a TDD system in which SBFD is introduced according to an embodiment of this application;
FIG. 5 is a diagram of an architecture of a PUCCH resource and a PUCCH resource set according to an embodiment of this application;
FIG. 6a is a schematic flowchart of a communication method according to an embodiment of this application;
FIG. 6b is a schematic flowchart of another communication method according to an embodiment of this application;
FIG. 6c is a schematic flowchart of still another communication method according to an embodiment of this application;
FIG. 7 is a diagram of a configuration based on a granularity of a PUCCH resource set according to an embodiment of this application;
FIG. 8 is a diagram of a spatial relationship configuration of a PUCCH resource according to an embodiment of this application;
FIG. 9 is a diagram of repeatedly transmitting UCI across different time units according to an embodiment of this application;
FIG. 10 is a schematic flowchart of yet another communication method according to an embodiment of this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of still another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, words such as "first" and "second" are merely used to distinguish between different objects, and do not limit quantities and execution sequences. In addition, the words such as "first" and "second" do not indicate a definite difference. For example, a first message, a second message, and the like are merely used to distinguish between different information, and do not limit a sequence of the first message, the second message, and the like. In addition, the terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists. In addition, "at least one item (piece)", "one or more of the following items (pieces)" or a similar expression thereof indicates any combination of these items, including any combination of singular items (pieces) or plural items (pieces). For example, at least one of a, b, or c may represent a, b, c, a and b, a and c, b and c, or a, b, and c, where a, b, and c each may be singular or plural.

In descriptions of this application, the word such as "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in descriptions of this application, both "when" and "if" mean that an apparatus performs corresponding processing in an objective case, are not intended to limit time, and do not require a determining action during implementation of the apparatus, or do not mean that there is another limitation.

"Simultaneously" in this application may be understood as being at a same time point, may be understood as being in a period of time, or may be understood as being in a same periodicity, and may be specifically understood with reference to a context.

In this application, unless otherwise specified, an element indicated in a singular form is intended to indicate "one or more", but does not indicate "one and only one".

In addition, the terms "system" and "network" in this specification may be used interchangeably in this specification.

It may be understood that, in embodiments of this application, "A corresponds to B" indicates that B is associated with A, and B may be determined based on A. However, it should be further understood that determining B based on A does not mean that B is determined based only on A. B may alternatively be determined based on A and/or other information.

It may be understood that in embodiments of this application, "indicate" and "indication" may include a direct indication and an indirect indication, or may include an explicit indication and an implicit indication. The description "specific indication information indicates A" or "indication information of A" may include that the indication information directly indicates A or indirectly indicates A, but does not mean that the indication information necessarily carries A. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information. Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. For example, the configuration information may include, but is not limited to, one or a combination of at least two of radio resource control signaling, MAC layer signaling, and physical layer signaling.

The technical solutions in embodiments of this application may be applied to various communication systems, for example, a universal mobile telecommunications system (universal mobile telecommunications system, UMTS) also referred to as a 3rd generation (3G) system, a long term evolution (long term evolution, LTE) system also referred to as a 4th generation (4G) system, a worldwide interoperability for microwave access (worldwide interoperability for microwave access, WiMAX) communication system, a 5th generation (5th generation, 5G) system, such as a new generation radio access technology (new radio, NR), a network integrating a plurality of systems, an internet of things system, an internet of vehicles system, and a future communication system, for example, a 6G system.

It should be understood that a network architecture described in embodiments of this application is intended to describe the technical solutions in embodiments of this application more clearly, and does not constitute a limitation on the technical solutions provided in embodiments of this application. A person of ordinary skill in the art may know that, as a network architecture evolves, the technical solutions provided in embodiments of this application are also applicable to a similar technical problem.

FIG. 2a is a diagram of an architecture of a communication system according to an embodiment of this application. As shown in FIG. 2a, the communication system includes a radio access network 100. The radio access network 100 may include at least one radio access network device (for example, 110a and 110b in FIG. 2a). The communication system may further include at least one terminal device (for example, 120a to 120j in FIG. 2a). The terminal device may be connected to the radio access network device in a wireless manner. Terminal devices may be connected to each other in a wired or wireless manner, and radio access network devices may be connected to each other in a wired or wireless manner. It may be understood that FIG. 2a is merely a diagram. The communication system may further include another network device, for example, may further include a core network device, a wireless relay device, and a wireless backhaul device, which are not shown in FIG. 2a.

The radio access network device may be referred to as a network device, and is an access device that is used by the terminal to wirelessly access the communication system. The radio access network device may be a base station (base station, BS), an evolved NodeB (evolved NodeB, eNodeB, eNB for short), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like. The radio access network device may alternatively be a module or unit that completes some functions of a base station, for example, may be a central unit (central unit, CU), or may be a distributed unit (distributed unit, DU). The base station including the CU and the DU may also be referred to as a base station in which a CU and a DU are split from each other. For example, the base station includes a gNB-CU and a gNB-DU. The CU may be further split into a CU control plane (CU control plane, CU-CP) and a CU user plane (CU user plane, CU-CP). For example, the base station includes a gNB-CU-CP, a gNB-CU-UP, and a gNB-DU. The CU herein may complete functions of a radio resource control protocol and a packet data convergence protocol (packet data convergence protocol, PDCP) of the base station, and may further complete functions of a service data adaptation protocol (service data adaptation protocol, SDAP). The DU may complete functions of a radio link control layer and a medium access control (medium access control, MAC) layer of the base station, and may further complete some or all functions of a physical layer. For specific descriptions of the foregoing protocol layers, refer to related technical specifications in the 3rd generation partnership project (3rd generation partnership project, 3GPP). The radio access network device may be a macro base station (for example, 110a in FIG. 2a), or may be a micro base station or an indoor base station (for example, 110b in FIG. 2a), or may be a relay node or a donor node. A specific technology and a specific device form that are used by the radio access network device are not limited in embodiments of this application.

In embodiments of this application, an apparatus configured to implement a function of the radio access network device may be a radio access network device, or may be an apparatus that can support the radio access network device in implementing the function, for example, a chip system, a communication module, or a modem. The apparatus may be installed in the radio access network device. In the technical solutions provided in embodiments of this application, the technical solutions provided in embodiments of this application are described by using an example in which the apparatus configured to implement the function of the radio access network device is a radio access network device and the radio access network device is a base station. The base station may support networks using a same access technology or different access technologies. A specific technology and a specific device form that are used by the radio access network device are not limited in embodiments of this application.

The terminal device is a device having a wireless transceiver function, and may send a signal to the base station, or receive a signal from the base station. The terminal device may also be referred to as a terminal, a user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wear, smart transportation, and smart city. The terminal may be a mobile phone, a tablet computer, a computer with a wireless transceiver function, a wearable device, a vehicle, an airplane, a ship, a robot, a robotic arm, a smart home device, a train detector, a gas station sensor, or the like. A specific technology and a specific device form that are used by the terminal are not limited in embodiments of this application.

The base station and the terminal may be at a fixed position, or may be mobile. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or uncrewed aerial vehicle 120i in FIG. 2a may be configured as a mobile base station. For the terminal 120j accessing the radio access network 100 via 120i, the terminal 120i is a base station. However, for the base station 110a, 120i is a terminal. In other words, communication between 110a and 120i is performed according to a radio air interface protocol. Certainly, communication between 110a and 120i may alternatively be performed according to an interface protocol between base stations. In this case, relative to 110a, 120i is also a base station. Therefore, both the base station and the terminal may be collectively referred to as communication apparatuses, 110a and 110b in FIG. 2a may be referred to as communication apparatuses having a function of the base station, and 120a to 120j in FIG. 2a may be referred to as communication apparatuses having a function of the terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz.

In embodiments of this application, an apparatus configured to implement the function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal and the terminal is a UE. A specific technology and a specific device form that are used by the terminal device are not limited in embodiments of this application.

In some scenarios, the UE may alternatively be configured to serve as the base station. For example, the UE may serve as a scheduling entity that provides a sidelink signal between UEs in vehicle-to-everything (vehicle-to-everything, V2X), device-to-device (device-to-device, D2D), peer-to-peer (peer-to-peer, P2P), or the like.

In some scenarios, the UE may alternatively be configured to serve as a relay node. For example, the UE may serve as a relay device (relay) or an integrated access and backhaul (integrated access and backhaul, IAB) node, and is configured to provide a wireless backhaul service for the terminal device.

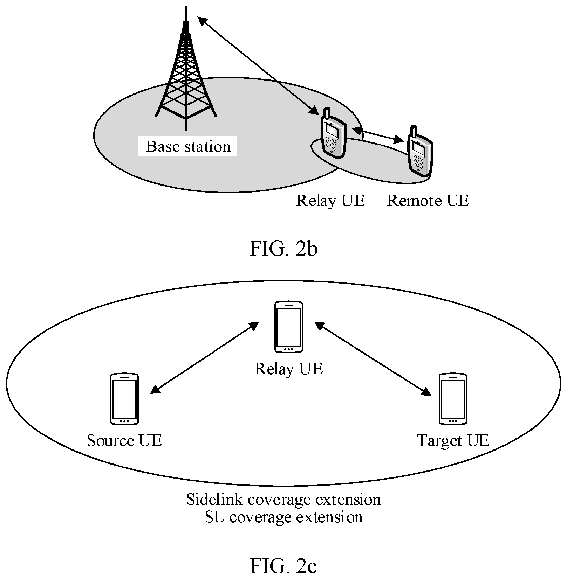

Optionally, a method provided in this application may be applied to a V2X scenario (for example, the foregoing scenario of communication between 120a and 120b in FIG. 2a), and may be further applied to a sidelink UE-to-network relay (Sidelink UE-to-Network Relay) scenario and a sidelink UE-to-UE relay (Sidelink UE-to-UE Relay) scenario. FIG. 2b is a diagram of a sidelink UE-to-network relay scenario according to an embodiment of this application. As shown in FIG. 2b, the sidelink UE-to-network relay scenario includes a remote UE (remote UE) and a relay UE (relay UE), and further includes a base station. A method provided in this application may be applied to communication between the remote UE and the relay UE. FIG. 2c is a diagram of a sidelink UE-to-UE relay scenario according to an embodiment of this application. As shown in FIG. 2c, the sidelink UE-to-UE relay scenario includes a source UE (source UE), a relay UE (relay UE), and a target UE (target UE). A method provided in this application may be applied to communication between the source UE and the relay UE and/or communication between the relay UE and the target UE.

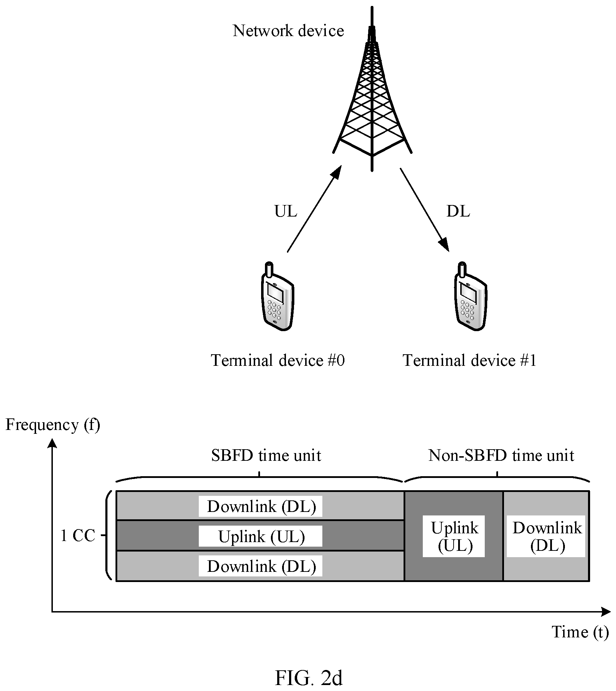

Optionally, the method provided in this application may be applied to a wireless communication system with subband full duplex on a network device side and half duplex on a terminal device side. As shown in FIG. 2d, for example, there are two terminal devices within coverage of a network device (a number of terminal devices in FIG. 2d is merely an example, and there may be more or fewer terminal devices in an actual scenario). An SBFD time unit may be associated with two downlink subbands and one uplink subband. In the SBFD time unit, a terminal device #0 sends an uplink signal to the network device, and a terminal device #1 receives a downlink signal sent by the network device.

Optionally, in FIG. 2a to FIG. 2d, one or more antennas may be configured for the terminal device, to receive and send data/information. Similarly, one or more antennas may also be configured for the radio access network device, to receive and send data/information. It may be understood that the radio access network device and the terminal device may further include a plurality of components (for example, a processor, a modulator, a multiplexer, a demodulator, or a demultiplexer) related to data/information sending and receiving. It may be further understood that FIG. 2a to FIG. 2d are merely diagrams. The communication system may further include another device, for example, may further include a core network device, a wireless relay device, and/or a wireless backhaul device, which are not shown in FIG. 2a to FIG. 2d. It may be further understood that FIG. 2a to FIG. 2d are merely examples. A number of radio access network devices and a number of terminal devices included in the communication system are not limited in embodiments of this application.

In embodiments of this application, the term "wireless communication" may also be referred to as "communication" for short, and the term "communication" may also be described as "data transmission", "information transmission", or "transmission".

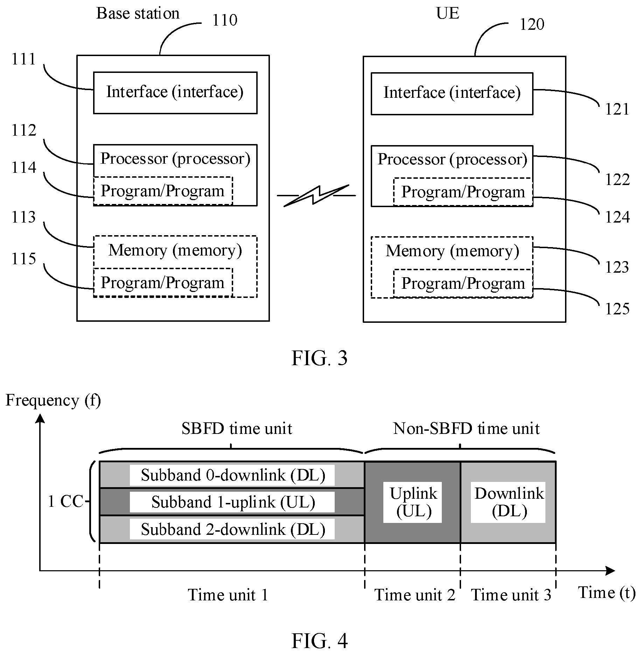

FIG. 3 is a simplified diagram of structures of a UE and a base station according to an embodiment of this application. For simplicity, FIG. 3 shows only main components in a base station 110 (which may correspond to 110a and 110b in FIG. 2a) and a UE 120 (which may correspond to 120a to 120j in FIG. 2a). In actual application, the structures of the base station and the UE may include more components than those shown in FIG. 3, or may include fewer components than those shown in FIG. 3, or may include only the components shown in FIG. 3. It should be understood that the base station shown in FIG. 3 may have a CU-DU split architecture, or may have a CU-DU non-split architecture. For a simplified structure of a device on a core network side, refer to the structures of the base station and the UE. Details are not described again. The following briefly describes the components in FIG. 3 separately.

The base station 110 includes an interface 111 and a processor 112. Optionally, the processor 112 may store a program 114. Optionally, the base station 110 may include a memory 113. Optionally, the memory 113 may store a program 115. The UE 120 includes an interface 121 and a processor 122. Optionally, the processor 122 may store a program 124. Optionally, the UE 120 may include a memory 123. Optionally, the memory 123 may store a program 125. These components work together to provide various functions described in this application. For example, the processor 112 and the interface 111 work together to provide a wireless connection between the base station 110 and the UE 120. The processor 122 and the interface 121 work together to implement downlink transmission and/or uplink transmission of the UE 120.

A processor (for example, the processor 112 and/or the processor 122) may include one or more processors and is implemented as a combination of computing devices. The processor (for example, the processor 112 and/or the processor 122) may separately include one or more of the following: a microprocessor, a microcontroller, a digital signal processor (digital signal processor, DSP), a digital signal processing device (DSP device, DSPD), an application-specific integrated circuit (application-specific integrated circuit, ASIC), a field programmable gate array (field programmable gate array, FPGA), a programmable logic device (programmable logic device, PLD), gating logic, transistor logic, a discrete hardware circuit, a processing circuit, other appropriate hardware or firmware, and/or a combination of hardware and software, and is configured to perform various functions described in this application. The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the UE 120 to execute a software program and process data in the software program.

The interface (for example, the interface 111 and/or 121) may be configured to implement communication with one or more computer devices (for example, UEs, BSs, and/or network nodes). In some embodiments, the interface may include a wire for coupling a wired connection, or a pin for coupling a wireless transceiver, or a chip and/or a pin for a wireless connection. In some embodiments, the interface may include a transmitter, a receiver, a transceiver, and/or an antenna. The interface may be configured to use any available protocol (for example, a 3GPP standard).

The program in this application may represent software in a broad sense. A non-limiting example of the software is program code, a program, a subprogram, instructions, an instruction set, code, a code segment, a software module, an application, or a software application. The program may run in a processor and/or a computer, so that the base station 110 and/or the UE 120 perform/performs various functions and/or processes described in this application.

The memory (for example, the memory 113 and/or the memory 123) may store data manipulated by the processors 112 and 122 when executing the software. The memories 113 and 123 may be implemented by using any storage technology. For example, the memory may be any available storage medium that can be accessed by the processor and/or the computer. A non-limiting example of the storage medium includes a RAM, a ROM, an EEPROM, a CD-ROM, a removable medium, an optical disc memory, a magnetic disk storage medium, a magnetic storage device, a flash memory, a register, a state memory, a remote mounted memory, a local or remote storage component, or any other medium that can carry or store software, data, or information and accessible to the processor/computer.

The memory (for example, the memory 113 and/or the memory 123) and the processor (for example, the processor 112 and/or the processor 122) may be separately disposed or integrated. The memory may be configured to be connected to the processor, so that the processor can read information from the memory, and store information in and/or write information into the memory. The memory 113 may be integrated into the processor 112. The memory 123 may be integrated into the processor 122. The processor (for example, the processor 112 and/or the processor 122) and the memory (for example, the memory 113 and/or the memory 123) may be disposed in an integrated circuit (for example, the integrated circuit may be disposed in the UE, the base station, or another network node).

Optionally, the components in the base station 110 and the UE 120 may also exist in a form of various interaction modules, for example, a radio resource control (radio resource control, RRC) signaling interaction module, that is, a module used by the base station 110 and the UE 120 to send and receive RRC signaling; a MAC signaling interaction module, that is, a module used by the base station 110 and the UE 120 to send and receive medium access control-control element (medium access control-control element, MAC-CE) signaling; and a PHY signaling and data interaction module, that is, a module used by the base station 110 and the UE 120 to send and receive uplink/downlink control signaling and uplink/downlink data.

The foregoing content describes the architecture of the communication system to which embodiments of this application can be applied. To better understand the technical solutions in embodiments of this application, the following briefly describes several terms or nouns related to this application, to facilitate understanding by a person skilled in the art.

1. Subband full duplex (subband full duplex, SBFD)

In a subband full duplex (subband full duplex, SBFD) solution, one component carrier (component carrier, CC) is divided into a plurality of subbands, and transmission directions of different subbands may be different, so that sending and receiving can be performed simultaneously on one symbol. In a typical SBFD solution, as shown in FIG. 4, a middle subband (for example, a subband 1 in FIG. 4) is an uplink subband, and two upper and lower subbands (for example, a subband 0 and a subband 2 in FIG. 4) are downlink subbands. It may be considered that in SBFD, different frequency domain resources (subbands) are used in an uplink and a downlink. In this solution, uplink transmission resources available to a terminal device increase, so that UL coverage can be effectively increased, and a UL delay can be reduced. In other words, after SBFD is introduced, a frequency resource configuration of one component carrier may include at least a downlink subband (DL subband) and an uplink subband (UL subband).

To reduce cross-link interference between downlink transmission in the DL subband and uplink transmission in the UL subband, a guard band (guard band) may be defined between the DL subband and the UL subband. In embodiments of this application, whether the guard band exists between the DL subband and the UL subband is not specifically limited. In addition, if the guard band exists, whether the guard band needs to be explicitly defined and whether transmission can be performed in the guard band are not specifically limited. Moreover, whether the DL subband and the UL subband may overlap is not limited in this application.

In this application, an SBFD time unit may be an SBFD symbol or an SBFD slot, and a non-SBFD time unit may be a non-SBFD symbol or a non-SBFD slot. The SBFD symbol may be considered as a symbol configured with SBFD, and the non-SBFD symbol may be considered as a symbol not configured with SBFD. The SBFD slot may be considered as a slot configured with SBFD, and the non-SBFD slot may be considered as a slot not configured with SBFD. Specifically, the non-SBFD symbol/slot may be an uplink symbol/slot, a downlink symbol/slot, or a flexible symbol/slot. For example, for downlink transmission, the non-SBFD symbol/slot may be a downlink symbol/slot or a flexible symbol/slot. For uplink transmission, the non-SBFD symbol/slot may be an uplink symbol/slot or a flexible symbol/slot. For example, in FIG. 4, a time unit 1 associated with the subband 0, the subband 1, and the subband 2 is an SBFD time unit. Component carriers associated with a time unit 2 and a time unit 3 are not divided into subbands, and the entire component carrier is used for the uplink or the downlink, and does not support simultaneous receiving and sending on one symbol. Therefore, the time unit 2 and the time unit 3 are non-SBFD time units.

For an SBFD configuration, refer to the following two possible configuration manners based on whether both an SBFD symbol and a non-SBFD symbol are included in one slot:

(1) The SBFD configuration is at a slot level. To be specific, all symbols included in one slot are configured as SBFD symbols or configured as non-SBFD symbols.
(2) The SBFD configuration is at a symbol level. To be specific, some symbols included in one slot may be configured as SBFD symbols, and the other symbols may be configured as non-SBFD symbols.

2. Uplink control information (uplink control information, UCI)

In a communication system, data transmission on uplink and downlink transmission channels needs to be supported by using uplink L1/L2 control signaling, and the uplink L1/L2 control signaling is usually also referred to as uplink control information (UCI). The UCI usually includes the following information: (1) a hybrid automatic repeat request-acknowledgment (hybrid automatic retransmission quest acknowledgment, HARQ-ACK) of a received downlink shared channel (downlink sharing channel, DL-SCH) transport block (transport block, TB); (2) channel state information (channel statement information, CSI) related to a downlink channel condition, which may be used to assist downlink scheduling, including multi-antenna and beamforming solutions and processes such as adaptive modulation and coding and time-frequency resource allocation; and (3) a scheduling request (scheduling request, SR), indicating that a UE needs an uplink resource for uplink shared channel (uplink sharing channel, UL-SCH) transmission.

3. Physical uplink control channel (physical uplink control channel, PUCCH)

Currently, the UCI is mainly transmitted on the PUCCH in the communication system. It should be noted that the UCI may be transmitted not only on the PUCCH, but also on a physical uplink shared channel (physical uplink sharing channel, PUSCH). For example, for a user equipment (user equipment, UE), when a PUSCH is transmitted at a PUCCH transmission moment, the UCI and data may be transmitted together on the PUSCH, and a PUCCH is not separately sent. Certainly, if the UE is capable of simultaneously sending the PUCCH and the PUSCH, the UE may also send the UCI on the PUCCH and the PUSCH simultaneously.

NR defines PUCCHs in a plurality of formats (format) to transmit different UCI, and different PUCCH formats have different duration and different numbers of carried bits. For example, refer to Table 1 below. A number of time domain symbols of a PUCCH format 0 and a PUCCH format 2 is 1 or 2, and may also be referred to as a short PUCCH format. A number of time domain symbols of a PUCCH format 1, a PUCCH format 3, and a PUCCH format 4 is 4 to 14, and may also be referred to as a long PUCCH format. Because a number of symbols is larger, coverage performance of a PUCCH in the long PUCCH format is usually better than coverage performance of a PUCCH in the short PUCCH format.

Table 1 NR PUCCH formats

| PUCCH format | Length in OFDM symbols $N_{\text{symb}}^{\text{PUCCH}}$ | Number of bits |
|---|---|---|
| 0 | 1 and 2 | $\leq 2$ |
| 1 | 4 to 14 | $\leq 2$ |
| 2 | 1 and 2 | $>2$ |
| 3 | 4 to 14 | $>2$ |
| 4 | 4 to 14 | $>2$ |

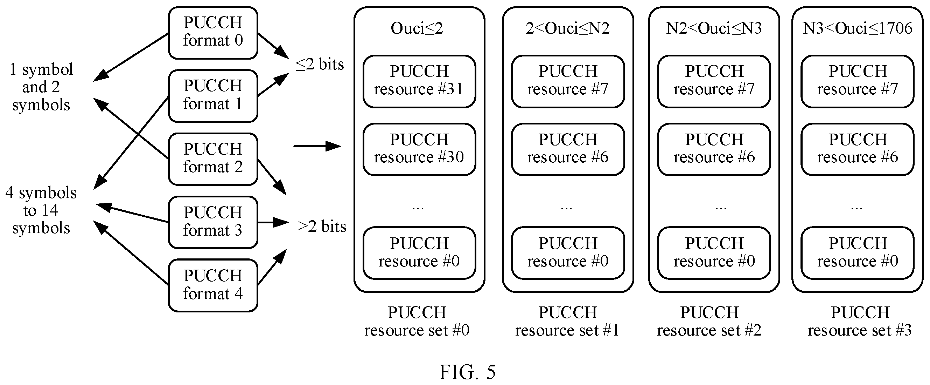

To support a more flexible PUCCH architecture, a concept of a PUCCH resource set (PUCCH resource set) is introduced in NR. One PUCCH resource set may include at least four PUCCH resources, and each PUCCH resource corresponds to one PUCCH format and all necessary parameters of the format, such as time domain resource information, frequency domain resource information, code domain resource information, coding information, and frequency hopping information. For example, in NR, for an architecture of the PUCCH resource and the PUCCH resource set, refer to FIG. 5. A PUCCH resource set #0 may include a maximum of 32 PUCCH resources, and another PUCCH resource set may include a maximum of eight PUCCH resources. In addition, one UE supports a maximum of four PUCCH resource sets, and each PUCCH resource set may separately carry a number of bits of UCI within a specific range. For example, the PUCCH resource set #0 may carry UCI of a maximum of 2 bits. Therefore, the PUCCH resource set #0 can include only PUCCH resources in PUCCH formats 0 and 1. For other PUCCH resource sets, a number of carried bits of UCI may be greater than 2. Therefore, these PUCCH resource sets may include PUCCH resources in other PUCCH formats than the formats 0 and 1. A maximum number of bits of UCI carried in a PUCCH resource set may be configured by a network device (for example, a base station) by using signaling.

4. Selection of a PUCCH resource set and a PUCCH resource

(1) When the UE is ready to transmit UCI, if the UCI includes a HARQ-ACK information bit, the UE may first select a PUCCH resource set based on a number of bits of the to-be-transmitted UCI, and then select a PUCCH resource in the selected PUCCH resource set. The base station may indicate, by using a PUCCH resource indicator field (PUCCH resource indicator field) in downlink control information (downlink control information, DCI), a specific PUCCH resource used by the terminal in the PUCCH resource set. For example, when the number of bits of the UCI is less than or equal to 2, the UE may select the PUCCH resource set #0 shown in FIG. 5. When the number of bits of the UCI is greater than 2 and less than or equal to N2, the UE may select a PUCCH resource set #1 shown in FIG. 5. Selection of a PUCCH resource set #2 and a PUCCH resource set #3 is not described herein. After the UE selects a PUCCH resource set, if a number of PUCCH resources included in the PUCCH resource set is not greater than 8, the UE may directly determine, based on a PUCCH resource indicator field in DCI, a specific PUCCH resource to be used in the PUCCH resource set. For a relationship between values of the field and PUCCH resources, refer to Table 2 below.

Table 2

| PUCCH resource indicator | | | PUCCH resource |
|---|---|---|---|
| 1 bit | 2 bits | 3 bits | |
| '0' | '00' | '000' | 1st PUCCH resource provided by *pucch-ResourceId* obtained from the 1st value of *resourceList* |
| '1' | '01' | '001' | 2nd PUCCH resource provided by *pucch-ResourceId* obtained from the 2nd value of *resourceList* |
| | '10' | '010' | 3rd PUCCH resource provided by *pucch-ResourceId* obtained from the 3rd value of *resourceList* |
| | '11' | '011' | 4th PUCCH resource provided by *pucch-ResourceId* obtained from the 4th value of *resourceList* |
| | | '100' | 5th PUCCH resource provided by *pucch-ResourceId* obtained from the 5th value of *resourceList* |
| | | '101' | 6th PUCCH resource provided by *pucch-ResourceId* obtained from the 6th value of *resourceList* |
| | | '110' | 7th PUCCH resource provided by *pucch-ResourceId* obtained from the 7th value of *resourceList* |
| | | '111' | 8th PUCCH resource provided by *pucch-ResourceId* obtained from the 8th value of *resourceList* |

If a number of PUCCH resources included in the PUCCH resource set is greater than 8, the UE may determine, based on both a PUCCH resource indicator field in DCI and a predefined rule, a specific PUCCH resource to be used in the PUCCH resource set. For the predefined rule, refer to the following formula:

$$
r_{\mathrm{PUCCH}} = \begin{cases} \left\lfloor \dfrac{n_{\mathrm{CCE},p} \cdot \left\lceil R_{\mathrm{PUCCH}}/8 \right\rceil}{N_{\mathrm{CCE},p}} \right\rfloor + \Delta_{\mathrm{PRI}} \cdot \left\lceil \dfrac{R_{\mathrm{PUCCH}}}{8} \right\rceil & \text{if} \quad \Delta_{\mathrm{PRI}} < R_{\mathrm{PUCCH}} \bmod 8 \\[4mm] \left\lfloor \dfrac{n_{\mathrm{CCE},p} \cdot \left\lfloor R_{\mathrm{PUCCH}}/8 \right\rfloor}{N_{\mathrm{CCE},p}} \right\rfloor + \Delta_{\mathrm{PRI}} \cdot \left\lfloor \dfrac{R_{\mathrm{PUCCH}}}{8} \right\rfloor + R_{\mathrm{PUCCH}} \bmod 8 & \text{if} \quad \Delta_{\mathrm{PRI}} \geq R_{\mathrm{PUCCH}} \bmod 8 \end{cases}
$$

$N_{\mathrm{CCE},p}$ is a number of control channel elements (control channel element, CCE) in a control resource set (control resource set, CORESET) p received by the UE on a physical downlink control channel (physical downlink control channel, PDCCH), $n_{\mathrm{CCE},p}$ is an index of a 1st CCE received by the UE on the PDCCH, $\Delta_{\mathrm{PRI}}$ is a value of the PUCCH resource indicator field in the DCI, $\lceil \cdot \rceil$ represents rounding up, $\lfloor \cdot \rfloor$ represents rounding down, and mod represents a modulo operation.

(2) When the UE is ready to transmit UCI, and the information does not include a HARQ-ACK information bit, for example, the UCI includes CSI information and/or SR information, a PUCCH resource used by the UE may be semi-statically configured by the network device (for example, the base station) by using radio resource control (radio resource control, RRC) signaling. For example, the PUCCH resource may be configured in CSI report configuration information or SR configuration information delivered by the base station.

First, technical problems to be specifically resolved in this application are analyzed and proposed. In a current TDD system, slots (slot) are classified into a downlink slot, a flexible slot, and an uplink slot. The downlink slot is used for downlink transmission, the flexible slot may be used for downlink transmission, uplink transmission, a guard period (GP), or as a reserved resource. The uplink slot is used for uplink transmission. A PUCCH configuration solution in the current TDD system is to provide a configuration of only one same PUCCH resource set for all slots used for uplink transmission, that is, all slots used for uplink transmission definitely use a same PUCCH resource set. After SBFD is introduced, slots may be classified into an SBFD slot and a non-SBFD slot. For details, refer to the PUCCH configuration solution in the existing TDD system. For all slots used for uplink transmission, a configuration of only one same PUCCH resource set is provided. However, this configuration lacks flexibility, and the following problems may exist:

(1) Because uplink and downlink subbands of the SBFD slot are closely adjacent, cross-link interference (CLI) is additionally introduced. As a result, when the SBFD slot and the non-SBFD slot use PUCCH resources in a same PUCCH resource set to transmit UCI, transmission performance of a PUCCH in the SBFD slot is lower than transmission performance of a PUCCH in the non-SBFD slot, affecting UCI transmission.

(2) In SBFD, a component carrier is divided into a plurality of subbands, a part of subbands are used for the uplink, and a part of subbands are used for the downlink. Therefore, frequency resources of some PUCCH resources may fall outside a frequency range of the uplink subband, and these PUCCH resources cannot be used for transmission. In other words, there may be a problem that some PUCCH resources can be used for transmission in the non-SBFD slot but cannot be used for transmission in the SBFD slot.

Currently, in a scenario in which SBFD is introduced, a configuration solution for the PUCCH resource is still being explored. Therefore, how to provide the configuration solution for the PUCCH resource in the scenario in which SBFD is introduced is an urgent problem to be resolved.

Therefore, this application provides a communication method and apparatus, and a readable storage medium. A network device may configure dedicated PUCCH resources for two types of time units: an SBFD time unit and a non-SBFD time unit respectively, so that PUCCH resource allocation flexibility can be improved, and a basis is provided for improving transmission performance of a PUCCH in the SBFD time unit. In addition, after two types of PUCCH resources are separately configured, same UCI can be allowed to be repeatedly transmitted across an SBFD time unit (symbol/slot) and a non-SBFD time unit (symbol/slot) on a PUCCH resource, to improve transmission performance of a PUCCH and a UCI transmission success rate, and reduce a UCI transmission delay. In addition, when the two types of PUCCH resources are separately configured, spatial relationship information (or transmission configuration indicator state information) associated with PUCCH transmission for different time unit types may be separately configured, so that the PUCCH in the SBFD time unit can be transmitted via a more appropriate beam, to improve transmission performance of the PUCCH.

For ease of understanding, with reference to more accompanying drawings, the following describes the technical solutions provided in this application.

In this application, unless otherwise specified, for same or similar parts of embodiments or implementations, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

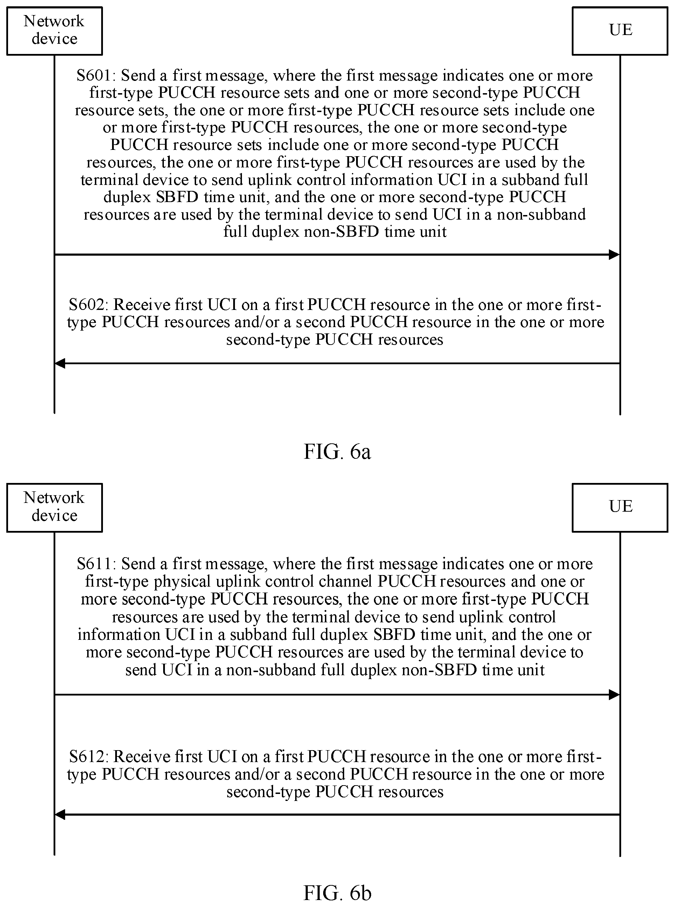

In embodiments of this application, a network device may configure dedicated PUCCH resources for an SBFD time unit and a non-SBFD time unit respectively in several manners in FIG. 6a to FIG. 6c. Communication methods in FIG. 6a to FIG. 6c may be applied to the network device and the terminal device (UE) in FIG. 2a to FIG. 2d. In other words, the network device and the UE in FIG. 2a to FIG. 2d may be configured to support and perform procedure steps of the methods shown in FIG. 6a to FIG. 6c.

FIG. 6a is a schematic flowchart of a communication method according to an embodiment of this application. As shown in FIG. 6a, the communication method includes but is not limited to the following steps.

S601: A network device sends a first message to a UE, where the first message indicates one or more first-type PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit.

Correspondingly, the UE receives the first message sent by the network device.

S602: The network device receives first UCI on a first PUCCH resource in the one or more first-type PUCCH resources and/or a second PUCCH resource in the one or more second-type PUCCH resources.

Correspondingly, the UE sends the first UCI on the first PUCCH resource in the one or more first-type PUCCH resources and/or the second PUCCH resource in the one or more second-type PUCCH resources.

In FIG. 6a, the network device configures, at a granularity of a PUCCH resource set (PUCCH resource set), PUCCH resources dedicated to an SBFD time unit and PUCCH resources dedicated to a non-SBFD time unit. For example, the network device configures one or more first-type PUCCH resource sets for the SBFD time unit, and configures one or more second-type PUCCH resource sets for the non-SBFD time unit. Optionally, each resource set in the one or more first-type PUCCH resource sets may include a part or all of the one or more first-type PUCCH resources, and each resource set in the one or more second-type PUCCH resource sets may include a part or all of the one or more second-type PUCCH resources.

FIG. 6b is a schematic flowchart of another communication method according to an embodiment of this application. The communication method includes but is not limited to the following steps.

S611: A network device sends a first message to a UE, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit.

Correspondingly, the UE receives the first message sent by the network device.

S612: The network device receives first UCI on a first PUCCH resource in the one or more first-type PUCCH resources and/or a second PUCCH resource in the one or more second-type PUCCH resources.

Correspondingly, the UE sends the first UCI on the first PUCCH resource in the one or more first-type PUCCH resources and/or the second PUCCH resource in the one or more second-type PUCCH resources.

In FIG. 6b, the network device configures, at a granularity of a PUCCH resource, PUCCH resources dedicated to an SBFD time unit and PUCCH resources dedicated to a non-SBFD time unit. For example, the network device configures one or more first-type PUCCH resources for the SBFD time unit, and configures one or more second-type PUCCH resources for the non-SBFD time unit.

Optionally, subsequently, if the network device needs to notify, in a form of a resource set, the UE of specific resources that may be used in the SBFD time unit and specific resources that may be used in the non-SBFD time unit, the network device may deliver configurations of two types of resource sets. One type of resource set in the two types of resource sets may be associated with a part or all of the one or more first-type PUCCH resources, and the other type of resource set may be associated with a part or all of the one or more second-type PUCCH resources. For example, the network device sends a second message to the terminal device, where the first message indicates one or more first-type PUCCH resource sets and one or more second-type PUCCH resource sets, any PUCCH resource set in the one or more first-type PUCCH resource sets includes one or more PUCCH resources in the one or more first-type PUCCH resources, and any PUCCH resource set in the one or more second-type PUCCH resource sets includes one or more PUCCH resources in the one or more second-type PUCCH resources.

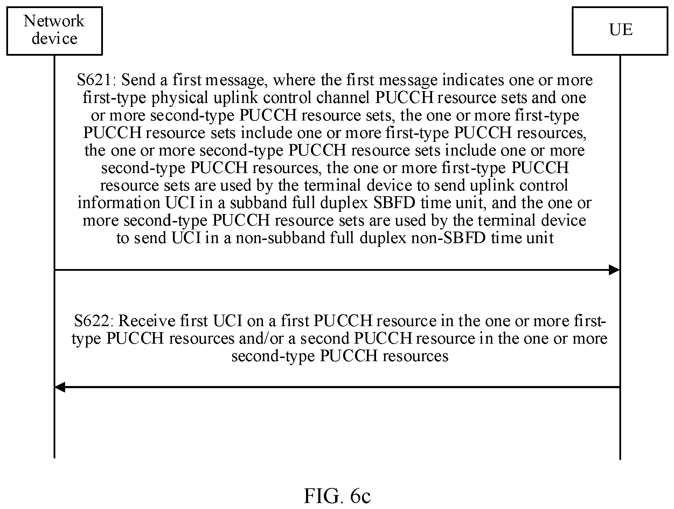

FIG. 6c is a schematic flowchart of still another communication method according to an embodiment of this application. The communication method includes but is not limited to the following steps.

S621: A network device sends a first message to a UE, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit.

Correspondingly, the UE receives the first message sent by the network device.

S622: The network device receives first UCI on a first PUCCH resource in the one or more first-type PUCCH resources and/or a second PUCCH resource in the one or more second-type PUCCH resources.

Correspondingly, the UE sends the first UCI on the first PUCCH resource in the one or more first-type PUCCH resources and/or the second PUCCH resource in the one or more second-type PUCCH resources.

In FIG. 6c, the network device configures, at a granularity of a PUCCH resource set (PUCCH resource set), PUCCH resources dedicated to an SBFD time unit and PUCCH resources dedicated to a non-SBFD time unit. In addition, during configuration, the network device may implicitly indicate, by indicating a purpose of the PUCCH resource set, a purpose of a PUCCH resource included in the PUCCH resource set. For example, that the one or more first-type PUCCH resource sets are used by the terminal device to send the uplink control information UCI in the subband full duplex SBFD time unit may be understood as that one or more first-type PUCCH resources included in the one or more first-type PUCCH resource sets are used by the terminal device to send the uplink control information UCI in the subband full duplex SBFD time unit. Optionally, each resource set in the one or more first-type PUCCH resource sets may include a part or all of the one or more first-type PUCCH resources, and each resource set in the one or more second-type PUCCH resource sets may include a part or all of the one or more second-type PUCCH resources.

It should be noted that the network device may configure, at the granularity of the PUCCH resource set (PUCCH resource set), the PUCCH resources dedicated to the SBFD time unit and the PUCCH resources dedicated to the non-SBFD time unit; or may configure, at the granularity of the PUCCH resource, the PUCCH resources dedicated to the SBFD time unit and the PUCCH resources dedicated to the non-SBFD time unit. This is not specifically limited in this application. The network device may directly indicate a purpose of the PUCCH resource, or may implicitly indicate, by indicating a purpose of the PUCCH resource set, a purpose of the PUCCH resource included in the PUCCH resource set. This is not specifically limited in this application.

Optionally, in FIG. 6a to FIG. 6c, the SBFD time unit may be an SBFD symbol or an SBFD slot, that is, the SBFD time unit is a symbol or a slot configured with SBFD; and the non-SBFD time unit may be a non-SBFD symbol or a non-SBFD slot, that is, the non-SBFD time unit is a symbol or a slot not configured with SBFD. It should be noted that the PUCCH resources (for example, one or more first-type PUCCH resources) dedicated to the SBFD time unit may be considered as PUCCH resources used for transmission on the SBFD symbol/slot, and the PUCCH resources (for example, one or more second-type PUCCH resources) dedicated to the non-SBFD time unit may be considered as PUCCH resources used for transmission on the non-SBFD symbol/slot. The non-SBFD symbol/slot configured with the PUCCH resource may be an uplink symbol/slot, a flexible symbol/slot, or the like.

Optionally, the first PUCCH resource used to receive and send the first UCI may include at least one of a time domain resource, a frequency domain resource, a code domain resource, or a space domain resource, and the second PUCCH resource used to receive and send the first UCI may include at least one of a time domain resource, a frequency domain resource, a code domain resource, or a space domain resource. Further optionally, each of the one or more first-type PUCCH resources includes a frequency domain resource, and frequencies of these PUCCH resources are within a frequency range of an uplink subband associated with the SBFD time unit, to avoid a problem that the PUCCH resource cannot be used for sending in the SBFD time unit because the frequency resource falls outside the range of the uplink subband.

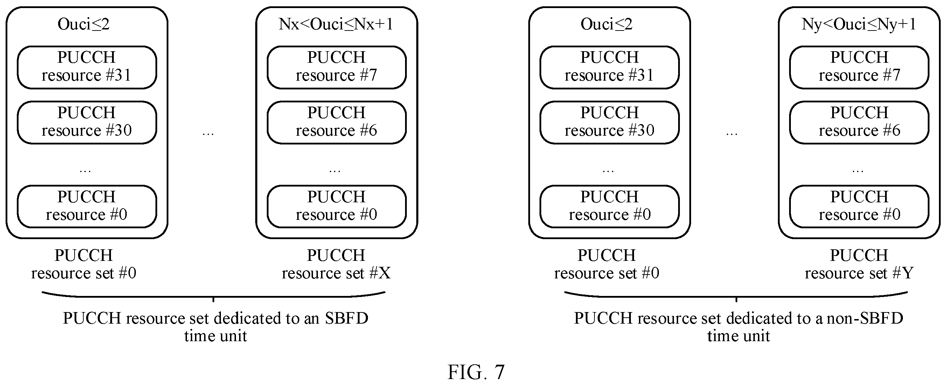

For ease of understanding, the following describes a manner in which the network device performs PUCCH resource configuration at a granularity of a PUCCH resource set. For example, as shown in FIG. 7, the network device may configure X PUCCH resource sets (corresponding to one or more first-type PUCCH resource sets) dedicated to an SBFD time unit, and configure Y PUCCH resource sets (corresponding to one or more second-type PUCCH resource sets) dedicated to a non-SBFD time unit, where both X and Y are positive integers. X may be greater than Y, X may be less than Y, or X may be equal to Y. Optionally, for the two types of PUCCH resource sets, in addition to independently configuring PUCCH resources included in the two types of PUCCH resource sets, the network device may also independently configure a maximum load size of each PUCCH resource set. In other words, the network device may independently configure a maximum number of bits of UCI that may be carried in each PUCCH resource set.

In a possible implementation, when configuring the PUCCH resources in the PUCCH resource sets, the network device may first configure all PUCCH resources that may be used by the network device. For example, the network device may first configure a dedicated resource ID for each PUCCH resource in the PUCCH resources that may be used. Then, when configuring the PUCCH resource sets, the network device may associate one or more PUCCH resources in these PUCCH resources in a configuration of each PUCCH resource set. For example, a resource ID corresponding to one or more PUCCH resources is configured in each PUCCH resource set. The following briefly describes a process of configuring, at the granularity of the PUCCH resource set, the PUCCH resources dedicated to the SBFD time unit and the PUCCH resources dedicated to the non-SBFD time unit. Refer to the following method:

Manner 1:

The network device configures J PUCCH resources by using first signaling, where the J PUCCH resources are resources that may be used by the network device, and J is a positive integer. When the network device configures X PUCCH resource sets dedicated to the SBFD time unit and/or Y PUCCH resource sets dedicated to the non-SBFD time unit, the X PUCCH resource sets dedicated to the SBFD time unit and/or the Y PUCCH resource sets dedicated to the non-SBFD time unit are all associated with all or a part of the J PUCCH resources.

Manner 2:

The network device configures J PUCCH resources and K PUCCH resources by using first signaling and second signaling respectively, where the J PUCCH resources and the K PUCCH resources are resources that may be used by the network device, and both J and K are positive integers. When the network device configures X PUCCH resource sets dedicated to the SBFD time unit and Y PUCCH resource sets dedicated to the non-SBFD time unit, the X PUCCH resource sets dedicated to the SBFD time unit may be associated with all or a part of the J PUCCH resources, and the Y PUCCH resource sets dedicated to the non-SBFD time unit may be associated with all or a part of the K PUCCH resources.

Further, for dedicated PUCCH resources in the foregoing two types of PUCCH resource sets, the network device may independently configure a parameter dedicated to each PUCCH resource, for example, a PUCCH format, whether intra-slot frequency hopping is supported, a frequency domain start position, a frequency domain position of $2^{nd}$ time of frequency hopping (when frequency hopping is supported), a number of physical resource blocks (physical resource block, PRB), a length and an index of a time domain orthogonal cover code (orthogonal cover code, OCC), a number of time domain symbols, a start symbol, and an initial cyclic shift. Optionally, a common parameter dedicated to the PUCCH format may be further independently configured, for example, whether inter-slot frequency hopping is supported, whether an additional DMRS is supported, a maximum coding rate, a number of transmission slots, whether $\pi/2$ BPSK modulation is supported, and whether simultaneous transmission of a HARQ-ACK and CSI is supported.

Optionally, when the network device configures each PUCCH resource, compared with the PUCCH resources (for example, the second PUCCH resource) dedicated to the non-SBFD time unit, the network device may configure longer time domain duration of the PUCCH resources (for example, the first PUCCH resource) dedicated to the SBFD time unit, for example, a larger number of slots and/or a larger number of symbols in a slot. In other words, a time domain resource length of the first PUCCH resource is greater than time domain duration of the second PUCCH resource. PUCCH resources corresponding to the PUCCH format 0/1/2/3/4 may be configured in this way. Longer time domain duration means larger receiving energy or a lower receiving coding rate, which helps improve transmission performance of the PUCCH.

Optionally, when the network device configures each PUCCH resource, compared with the PUCCH resources dedicated to the non-SBFD time unit, the network device may configure a wider frequency resource width of the PUCCH resources dedicated to the SBFD time unit, for example, a larger number of resource blocks (resource block, RB). In other words, a frequency resource width of the first PUCCH resource is greater than a frequency resource width of the second PUCCH resource. A wider frequency resource means larger receiving energy, a lower receiving coding rate, or a longer orthogonal sequence, which helps improve transmission performance of the PUCCH.

Optionally, when the network device configures each PUCCH resource, compared with the PUCCH resources dedicated to the non-SBFD time unit, the network device may configure a lower maximum coding rate of the PUCCH resources dedicated to the SBFD time unit. In other words, a maximum coding rate of the first PUCCH resource is less than a maximum coding rate of the second PUCCH resource, and a lower receiving coding rate helps improve transmission performance of the PUCCH. For example, the network device may configure a lower maximum coding rate for PUCCH resources corresponding to the PUCCH format 2/3/4.

Optionally, when the network device configures each PUCCH resource, compared with the PUCCH resources dedicated to the non-SBFD time unit, the network device may configure more demodulation reference signal (demodulation reference signal, DMRS) symbols of the PUCCH resources dedicated to the SBFD time unit. In other words, a number of DMRS symbols of the first PUCCH resource is greater than a number of DMRS symbols of the second PUCCH resource, and more DMRS symbols help improve demodulation performance of the PUCCH, and further improve transmission performance of the PUCCH. For example, the network device may configure a larger number of DMRS symbols for PUCCH resources corresponding to the PUCCH format 1/2/3/4.

In a possible implementation, when configuring each PUCCH resource, the network device may also configure spatial relationship information (or transmission configuration indicator state information) associated with the PUCCH resource. Optionally, the network device may independently configure spatial relationship information (or transmission configuration indicator state information) associated with PUCCH transmission (corresponding to the first PUCCH resource) in the SBFD time unit and spatial relationship information (or transmission configuration indicator state information) associated with PUCCH transmission (corresponding to the second PUCCH resource) in the non-SBFD time unit. For example, spatial relationship information (or transmission configuration indicator state information) configured for the one or more first-type PUCCH resources and spatial relationship information (or transmission configuration indicator state information) configured for the one or more second-type PUCCH resource may be the same or may be different. For another example, spatial relationship information (or transmission configuration indicator state information) configured for each resource in the one or more first-type PUCCH resources may be the same or may be different, and spatial relationship information (or transmission configuration indicator state information) configured for each resource in the one or more second-type PUCCH resources may be the same or may be different. In embodiments of this application, the network device independently configures the spatial relationship information associated with the PUCCH transmission in the SBFD time unit and the spatial relationship information associated with the PUCCH transmission in the non-SBFD time unit, so that the PUCCH in the SBFD time unit can be transmitted via a more appropriate beam (for example, with smaller CLI interference), to reduce or avoid impact of the CLI on PUCCH transmission, and improve transmission performance of the PUCCH in the SBFD time unit.

Optionally, the spatial relationship information (or the transmission configuration indicator state information) may include a reference signal associated with the PUCCH, for example, a sounding reference signal (sounding reference signal, SRS), a channel state information reference signal (channel statement information reference signal, CSI-RS), or a synchronization broadcast block (synchronization signal/PBCH block, SSB). Further optionally, the spatial relationship information (or the transmission configuration indicator state information) may further include a power control parameter of the PUCCH, for example, an open-loop parameter Po, a closed-loop parameter, and a closed-loop process index.

For how to configure or activate the spatial relationship information of the PUCCH, refer to the following several example manners:

(1) In a scenario in which the network device may explicitly configure the spatial relationship information (spatial setting), for a case of whether PUCCH resources are configured for two types of time units (symbols/slots) respectively, refer to the following two possible activation manners:

1. In a scenario in which dedicated PUCCH resources are configured for two types of time units (symbols/slots):

the SBFD time unit (symbol/slot) and the non-SBFD time unit (symbol/slot) respectively, the network device may indicate, by using a medium access control-control element (medium access control-control element, MAC-CE), spatial relationship information of PUCCH resources used for transmission in different types of time units. For example, the network device sends a third message, to indicate a reference signal associated with the first PUCCH resource and a reference signal associated with the second PUCCH resource. Alternatively, the network device may indicate, by using different MAC-CEs, spatial relationship information of PUCCH resources used for transmission in different types of time units. For example, the network device sends a third message and a fourth message, where the third message indicates a reference signal associated with the first PUCCH resource, and the fourth message indicates a reference signal associated with the second PUCCH resource.

2. In a scenario in which different PUCCH resources are not configured for two types of time units (symbols/slots): the SBFD time unit (symbol/slot) and the non-SBFD time unit (symbol/slot), that is, the network device does not configure dedicated PUCCH resources for the SBFD time unit and the non-SBFD time unit respectively, resources in a same PUCCH resource set are used in the two types of time units. The network device may indicate two pieces of spatial relationship information for a PUCCH resource by using a MAC-CE, where the two pieces of spatial relationship information are used for transmission of the PUCCH resource in the two different types of time units (symbols/slots) respectively.

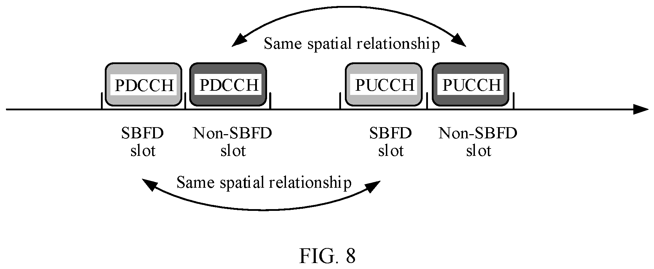

(2) In a scenario in which the network device does not explicitly configure the spatial relationship information (spatial setting), regardless of whether dedicated PUCCH resources are configured for two types of time units (symbols/slots): the SBFD time unit (symbol/slot) and the non-SBFD time unit (symbol/slot) respectively, spatial relationship information of PUCCH transmission performed in each of the two different types of time units (symbols/slots) is the same as spatial relationship information of PDCCH transmission performed in a same type of time unit (symbol/slot). Refer to FIG. 8. Spatial relationship information of a PUCCH in an SBFD slot and spatial relationship information of a PDCCH in an SBFD slot are the same, and spatial relationship information of a PUCCH in a non-SBFD slot and spatial relationship information of a PDCCH in a non-SBFD slot are the same. For example, the reference signal associated with the first PUCCH resource is the same as a reference signal associated with a first physical downlink control channel PDCCH that is received by the terminal device in an SBFD time unit, and the first PDCCH is received by the terminal device in a control resource set CORESET with a smallest index value in an active downlink bandwidth part BWP corresponding to the SBFD time unit; and the reference signal associated with the second PUCCH resource is the same as a reference signal associated with a second PDCCH that is received by the terminal device in a non-SBFD time unit, and the second PDCCH is received by the terminal device in a CORESET with a smallest index value in an active downlink BWP corresponding to the non-SBFD time unit.

Optionally, the first message used by the network device to deliver the PUCCH resources dedicated to the SBFD time unit and the PUCCH resources dedicated to the non-SBFD time unit to the UE may be RRC signaling, system information block 1 (SIB1) signaling, or the like. It should be noted that the network device may deliver, by using one piece of signaling, configurations of the PUCCH resources dedicated to the two types of time units together to the UE, or may deliver, a plurality of times by using a plurality of pieces of signaling, configurations of the PUCCH resources dedicated to the two types of time units. This is not specifically limited herein.

After delivering the PUCCH resources dedicated to the two types of time units to the terminal device (corresponding to step S601, S611, or S621), the network device may subsequently receive, on these PUCCH resources, UCI uploaded by the terminal device, that is, receive, on the first PUCCH resource in the one or more first-type PUCCH resources and/or the second PUCCH resource in the one or more second-type PUCCH resources, the first UCI sent by the terminal device (corresponding to step S602, S612, or S622).

In a possible implementation, after the UE receives the one or more first-type PUCCH resource sets and the one or more second-type PUCCH resource sets (or the one or more first-type PUCCH resources and the one or more second-type PUCCH resources), for to-be-transmitted UCI (corresponding to the first UCI), the UE may repeatedly transmit the UCI across the SBFD time unit and the non-SBFD time unit.

Optionally, the UE may repeatedly transmit the first UCI N times on the first PUCCH resource corresponding to the SBFD time unit, and repeatedly transmit the first UCI M times on the second PUCCH resource corresponding to the non-SBFD time unit. The first PUCCH resource belongs to the one or more first-type PUCCH resources, the second PUCCH resource belongs to the one or more second-type PUCCH resources, and both M and N are integers greater than 0. Correspondingly, the network device receives, on PUCCH resources (including the first PUCCH resource and the second PUCCH resource) corresponding to different time units, the first UCI repeatedly transmitted by the UE. In embodiments of this application, the UE repeatedly transmits same UCI information in two types of time units on different PUCCH resources respectively, to improve transmission performance of the PUCCH, improve the UCI transmission success rate, and reduce the UCI transmission delay.

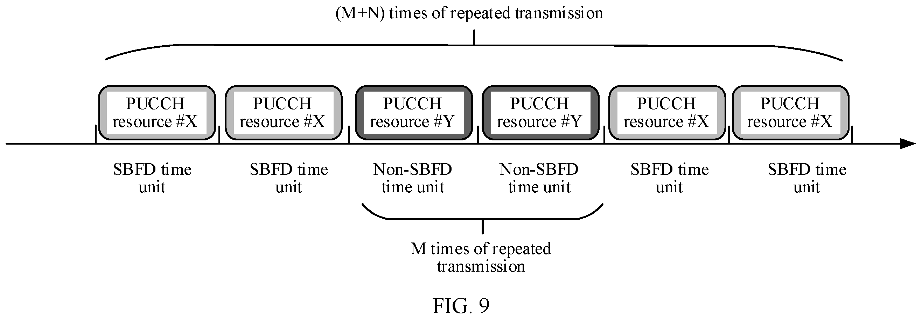

For example, the UE may first determine a PUCCH resource (corresponding to the first PUCCH resource) used to transmit the first UCI in the SBFD time unit and a PUCCH resource (corresponding to the second PUCCH resource) used to transmit the first UCI information in the non-SBFD time unit respectively. Then, the UE repeatedly transmits the first UCI in the SBFD time unit and the non-SBFD time unit based on the determined one or more PUCCH resources. For example, as shown in FIG. 9, the UE may determine to use a PUCCH resource #X in an SBFD time unit (symbol/slot) and use a PUCCH resource #Y in a non-SBFD time unit (symbol/slot) respectively, to associate the PUCCH resource #X with the PUCCH resource #Y. Further, for M+N times of repeated transmission, the UE may repeatedly transmit the first UCI information N times on the PUCCH resource #X, and repeatedly transmit the first UCI information M times on the PUCCH resource #Y.

For example, SBFD time units may include an SBFD slot 1, an SBFD slot 2, ..., and an SBFD slot N, and non-SBFD time units may include a non-SBFD slot 1, a non-SBFD slot 2, ..., and a non-SBFD slot M. For M+N times of repeated transmission, the UE may separately transmit the UCI once in the SBFD slot 1, the SBFD slot 2, ..., and the SBFD slot N on the PUCCH resource #X, and separately transmit the UCI once in the non-SBFD slot 1, the non-SBFD slot 2, ..., and the non-SBFD slot M on the PUCCH resource #Y. It may be understood that the UE may also separately transmit the UCI on a plurality of SBFD symbols and non-SBFD symbols. Details are not described herein.

It should be noted that the UE may repeatedly transmit the UCI across the SBFD time unit and the non-SBFD time unit, or may transmit the UCI only in the SBFD time unit, or transmit the UCI only in the non-SBFD time unit. For example, the UE sends the first UCI on the first PUCCH resource in the one or more first-type PUCCH resources or the second PUCCH resource in the one or more second-type PUCCH resource sets. Correspondingly, the network device receives, on the first PUCCH resource in the one or more first-type PUCCH resources or the second PUCCH resource in the one or more second-type PUCCH resources, the first UCI sent by the terminal device.

For how the UE determines the PUCCH resources used to transmit the UCI in the SBFD time unit and the non-SBFD time unit, refer to the following manners:

(1) When the UCI information includes HARQ-ACK information

In a possible implementation, the network device delivers DCI, where the DCI includes one indicator field (corresponding to a first PUCCH resource indicator field), and the UE may determine, based on the indicator field in the DCI delivered by the network device, the PUCCH resources used in the SBFD time unit and the non-SBFD time unit respectively.

In a possible implementation, the network device delivers DCI, where the DCI includes two indicator fields (corresponding to a first PUCCH resource indicator field and a second PUCCH resource indicator field), and the UE may determine, based on the two indicator fields in the DCI delivered by the network device, the PUCCH resources used in the SBFD time unit and the non-SBFD time unit respectively. For example, one of the two indicator fields in the DCI may reuse an existing PUCCH resource indicator field, and the other indicator field may be a newly introduced indicator field, for example, referred to as a second PUCCH resource indicator field. The former is associated with the non-SBFD time unit, and indicates the PUCCH resource used in the non-SBFD time unit. The latter (that is, the newly introduced indicator field) is associated with the SBFD time unit, and indicates the PUCCH resource used in the SBFD time unit.

Optionally, before determining the used PUCCH resources based on the indicator fields carried in the DCI, the UE may first determine the used PUCCH resource set(s) based on a number of bits of the to-be-transmitted UCI information. When the network device does not configure two types of dedicated PUCCH resource sets, for a method for determining the PUCCH resource set by the UE, refer to the conventional technology. Details are not described herein again. When the network device configures two types of dedicated PUCCH resource sets, that is, the network device configures the one or more first-type PUCCH resource sets and the one or more second-type PUCCH resource sets, the UE determines the PUCCH resource set used in the SBFD time unit and the PUCCH resource set used in the non-SBFD time unit respectively. In a possible implementation, the UE determines a PUCCH resource set in the one or more first-type PUCCH resource sets and a PUCCH resource set in the one or more second-type PUCCH resource sets respectively based on the number of bits of the to-be-transmitted UCI information. Then, the UE separately determines, based on the indicator field in the DCI, a specific PUCCH resource used in the corresponding PUCCH resource set. For how the UE determines the corresponding PUCCH resource set based on the number of bits of the UCI and determines the specific PUCCH resource based on the indicator field in the DCI, refer to the related descriptions in the foregoing "selection of a PUCCH resource set and a PUCCH resource". Details are not described herein again.

It should be noted that the foregoing method is applicable to a scenario of dynamic scheduling of a physical downlink shared channel (physical downlink shared channel, PDSCH), and is also applicable to a scenario of semi-persistent scheduling of the PDSCH.

(2) When the UCI information does not include HARQ-ACK information, but includes CSI information and/or SR information

In this scenario, the network device may configure, by using RRC signaling, PUCCH resources used by the UE to transmit the UCI in the SBFD time unit and the non-SBFD time unit respectively. To be specific, the network device may send a seventh message, where the seventh message indicates the first PUCCH resource and the second PUCCH resource, and the seventh message indicates the terminal device to transmit the first UCI on the first PUCCH resource and the second PUCCH resource. For example, when the to-be-transmitted UCI information is a CSI report or an SR, the network device may include, in CSI report configuration information or SR configuration information, the PUCCH resources used to transmit the UCI in the SBFD time unit and the non-SBFD time unit respectively. Optionally, the seventh message may be radio resource control RRC signaling, a system information block SIB, or a MAC-CE. This is not specifically limited herein.

It should be noted that after SBFD is introduced, the network device may configure dedicated PUCCH resources for two types of time units: the SBFD time unit and the non-SBFD time unit respectively; or may not configure dedicated PUCCH resources for the SBFD time unit and the non-SBFD time unit respectively, and a same PUCCH resource is used in the two types of time units.

In a possible implementation, when the network device does not configure dedicated PUCCH resources for two types of time units: the SBFD time unit and the non-SBFD time unit respectively, the UE may repeatedly transmit the UCI in the SBFD time unit and the non-SBFD time unit on a same PUCCH resource separately. Correspondingly, the network device may receive, in different time units on the same PUCCH resource, the UCI repeatedly transmitted by the UE.

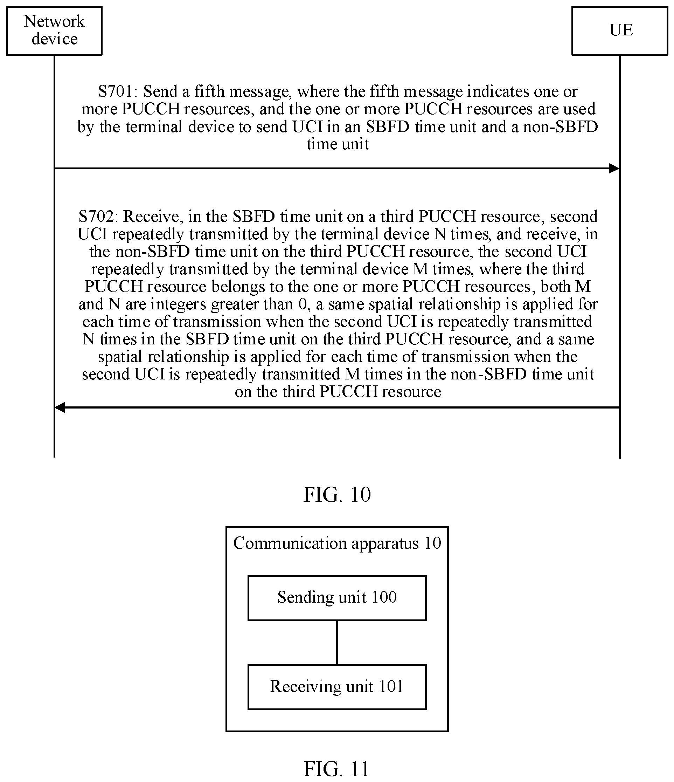

FIG. 10 is a schematic flowchart of yet another communication method according to an embodiment of this application. The communication method includes but is not limited to the following steps.

S701: A network device sends a fifth message to a UE, where the fifth message indicates one or more PUCCH resources, and the one or more PUCCH resources are used by the terminal device to send UCI in an SBFD time unit and a non-SBFD time unit.

S702: The network device receives, in the SBFD time unit on a third PUCCH resource, second UCI repeatedly transmitted by the terminal device N times, and receives, in the non-SBFD time unit on the third PUCCH resource, the second UCI repeatedly transmitted by the terminal device M times, where the third PUCCH resource belongs to the one or more PUCCH resources, both M and N are integers greater than 0, a same spatial relationship is applied for each time of transmission when the second UCI is repeatedly transmitted N times in the SBFD time unit on the third PUCCH resource, and a same spatial relationship is applied for each time of transmission when the second UCI is repeatedly transmitted M times in the non-SBFD time unit on the third PUCCH resource.

Optionally, the network device may indicate two pieces of spatial relationship information for a PUCCH resource by using a MAC-CE, where the two pieces of spatial relationship information are used for transmission of the PUCCH resource in the two different types of time units (symbols/slots) respectively. For example, the network device sends a sixth message, where the sixth message indicates a spatial relationship corresponding to the third PUCCH resource in the SBFD time unit and a spatial relationship corresponding to the third PUCCH resource in the non-SBFD time unit. The network device may configure a same spatial relationship or different spatial relationships for a same PUCCH resource in different time units. This is not specifically limited herein.

Optionally, in step S701, the network device performs configuration at a granularity of a PUCCH resource. Subsequently, if the network device needs to notify, in a form of a resource set, the UE of specific resources that may be used in the SBFD time unit and the non-SBFD time unit, the network device may deliver a configuration of a resource set. The resource set may be associated with a part or all of the foregoing one or more first PUCCH resources. It should be noted that the network device may alternatively perform configuration at a granularity of a PUCCH resource set. This is not specifically limited herein. For specific configuration, refer to the related descriptions in FIG. 6a and FIG. 6c. Details are not described herein again.

It should be noted that the UE may repeatedly transmit the UCI across the SBFD time unit and the non-SBFD time unit, or may transmit the UCI only in the SBFD time unit, or transmit the UCI only in the non-SBFD time unit on a same PUCCH resource. For example, the UE sends the second UCI in the SBFD time unit on the third PUCCH resource, or sends the second UCI in the non-SBFD time unit on the third PUCCH resource. Correspondingly, the network device receives, in the SBFD time unit on the third PUCCH resource, or in the non-SBFD time unit on the third PUCCH resource, the second UCI sent by the terminal device.

In conclusion, in the foregoing embodiment, the network device may configure dedicated PUCCH resources for two types of time units: the SBFD time unit and the non-SBFD time unit respectively, so that PUCCH resource allocation flexibility can be improved, and a basis is provided for improving transmission performance of a PUCCH in the SBFD time unit. In addition, after two types of PUCCH resources are separately configured, same UCI can be allowed to be repeatedly transmitted across the SBFD time unit (symbol/slot) and the non-SBFD time unit (symbol/slot) on a PUCCH resource, to improve transmission performance of a PUCCH and a UCI transmission success rate, and reduce a UCI transmission delay. In addition, when the two types of PUCCH resources are separately configured, spatial relationship information (or transmission configuration indicator state information) associated with PUCCH transmission for different time unit types may be separately configured, so that the PUCCH in the SBFD time unit can be transmitted via a more appropriate beam, to improve transmission performance of the PUCCH.

The foregoing content describes in detail the methods provided in this application. To facilitate implementation of the foregoing solutions in embodiments of this application, embodiments of this application further provide corresponding apparatuses or devices.

In this application, the apparatus is divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, division into the modules is an example, and is merely logical function division. In actual implementation, another division manner may be used. The following describes apparatuses in embodiments of this application with reference to the accompanying drawings.

FIG. 11 is a diagram of a structure of a communication apparatus according to an embodiment of this application. The communication apparatus 10 may be configured to implement functions of the UE or the network device in any one of the method embodiments in FIG. 6a to FIG. 6c or FIG. 10, and therefore can also implement beneficial effects of the foregoing method embodiments.

As shown in FIG. 11, the communication apparatus 10 may include a sending unit 100 and a receiving unit 101. In a possible design, when the communication apparatus 10 is configured to implement functions of the network device in FIG. 6a, the communication apparatus 10 may be one of 110a and 110b shown in FIG. 2a, or may be a module (for example, a chip) used in the network device. Functions of units are as follows:

The sending unit 100 is configured to send a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit.

The receiving unit 101 is configured to receive, on a first PUCCH resource in the one or more first-type PUCCH resources and/or a second PUCCH resource in the one or more second-type PUCCH resources, first UCI sent by the terminal device.

In a possible design, when the communication apparatus 10 is configured to implement functions of the network device in FIG. 6b, the communication apparatus 10 may be one of 110a and 110b shown in FIG. 2a, or may be a module (for example, a chip) used in the network device. Functions of units are as follows:

The sending unit 100 is configured to send a first message to a terminal device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit.

The receiving unit 101 is configured to receive, on a first PUCCH resource in the one or more first-type PUCCH resources and/or a second PUCCH resource in the one or more second-type PUCCH resources, first UCI sent by the terminal device.

In a possible implementation, the sending unit 100 is further configured to send a second message to the terminal device, where the second message indicates one or more first-type physical uplink control channel PUCCH resource sets and one or more second-type PUCCH resource sets, any PUCCH resource set in the one or more first-type PUCCH resource sets includes one or more PUCCH resources in the one or more first-type PUCCH resources, and any PUCCH resource set in the one or more second-type PUCCH resource sets includes one or more PUCCH resources in the one or more second-type PUCCH resources.

In a possible design, when the communication apparatus 10 is configured to implement functions of the network device in FIG. 6c, the communication apparatus 10 may be one of 110a and 110b shown in FIG. 2a, or may be a module (for example, a chip) used in the network device. Functions of units are as follows:

The sending unit 100 is configured to send a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit.

The receiving unit 101 is configured to receive, on a first PUCCH resource in the one or more first-type PUCCH resources and/or a second PUCCH resource in the one or more second-type PUCCH resources, first UCI sent by the terminal device.

In a possible implementation, the receiving unit 101 is further configured to receive, on the first PUCCH resource corresponding to the SBFD time unit, the first UCI repeatedly transmitted by the terminal device N times, where the first PUCCH resource belongs to the one or more first-type PUCCH resources; and

receive, on the second PUCCH resource corresponding to the non-SBFD time unit, the first UCI repeatedly transmitted by the terminal device M times, where the second PUCCH resource belongs to the one or more second-type PUCCH resources, and both M and N are integers greater than 0.

In a possible implementation, the receiving unit 101 is further configured to receive the first UCI on the first PUCCH resource in a first PUCCH resource set, where the first PUCCH resource set belongs to the one or more first-type PUCCH resource sets; and

receive the first UCI on the second PUCCH resource in a second PUCCH resource set, where the second PUCCH resource set belongs to the one or more second-type PUCCH resource sets.

In a possible implementation, the sending unit 100 is further configured to send downlink control information DCI, where the DCI includes a first PUCCH resource indicator field, and the first PUCCH resource indicator field is for determining the first PUCCH resource and the second PUCCH resource.

In a possible implementation, the sending unit 100 is further configured to send downlink control information DCI, where the DCI includes a first PUCCH resource indicator field and a second PUCCH indicator field, the first PUCCH resource indicator field is for determining the first PUCCH resource, and the second PUCCH resource indicator field is for determining the second PUCCH resource.

In a possible implementation, the sending unit 100 is further configured to send a seventh message, where the seventh message indicates the first PUCCH resource and the second PUCCH resource, and the seventh message indicates the terminal device to transmit the first UCI on the first PUCCH resource and the second PUCCH resource.

In a possible implementation, the sending unit 100 is further configured to send a third message, where the third message indicates a reference signal associated with the first PUCCH resource and a reference signal associated with the second PUCCH resource.

In a possible implementation, the sending unit 100 is further configured to send a third message and a fourth message, where the third message indicates a reference signal associated with the first PUCCH resource, and the fourth message indicates a reference signal associated with the second PUCCH resource.

In a possible design, when the communication apparatus 10 is configured to implement functions of the UE in FIG. 6a, the communication apparatus 10 may be one of the terminals 120a to 120j shown in FIG. 2a, or may be a module (for example, a chip) used in the terminal. Functions of units are as follows:

The receiving unit 101 is configured to receive a first message from a network device, where the first message indicates one or more first-type PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used to send uplink control information UCI in a subband full duplex SBFD time unit, and the one or more second-type PUCCH resources are used to send UCI in a non-subband full duplex non-SBFD time unit.

The sending unit 100 is configured to send first UCI on a first PUCCH resource in the one or more first-type PUCCH resources and/or a second PUCCH resource in the one or more second-type PUCCH resource sets.

In a possible design, when the communication apparatus 10 is configured to implement functions of the UE in FIG. 6b, the communication apparatus 10 may be one of the terminals 120a to 120j shown in FIG. 2a, or may be a module (for example, a chip) used in the terminal. Functions of units are as follows:

The receiving unit 101 is configured to receive a first message from a network device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit.

The sending unit 100 is configured to send first UCI on a first PUCCH resource in the one or more first-type PUCCH resources and/or a second PUCCH resource in the one or more second-type PUCCH resource sets.

In a possible implementation, the receiving unit 101 is further configured to receive a second message from the network device, where the second message indicates one or more first-type physical uplink control channel PUCCH resource sets and one or more second-type PUCCH resource sets, any PUCCH resource set in the one or more first-type PUCCH resource sets includes one or more PUCCH resources in the one or more first-type PUCCH resources, and any PUCCH resource set in the one or more second-type PUCCH resource sets includes one or more PUCCH resources in the one or more second-type PUCCH resources.

In a possible design, when the communication apparatus 10 is configured to implement functions of the UE in FIG. 6c, the communication apparatus 10 may be one of the terminals 120a to 120j shown in FIG. 2a, or may be a module (for example, a chip) used in the terminal. Functions of units are as follows:

The receiving unit 101 is configured to receive a first message from a network device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit.

The sending unit 100 is configured to send first UCI on a first PUCCH resource in the one or more first-type PUCCH resources and/or a second PUCCH resource in the one or more second-type PUCCH resource sets.

In a possible implementation, the sending unit 100 is further configured to repeatedly transmit the first UCI N times on the first PUCCH resource corresponding to the SBFD time unit, where the first PUCCH resource belongs to the one or more first-type PUCCH resources; and

repeatedly transmit the first UCI M times on the second PUCCH resource corresponding to the non-SBFD time unit, where the second PUCCH resource belongs to the one or more second-type PUCCH resources, and both M and N are integers greater than 0.

In a possible implementation, the first UCI includes hybrid automatic repeat-acknowledgment HARQ-RACK information, and the apparatus further includes:

> a processing unit 102, configured to determine a first PUCCH resource set based on a number of bits of the first UCI, where the first PUCCH resource set belongs to the one or more first-type PUCCH resource sets, and the first PUCCH resource belongs to the first PUCCH resource set; and
> determine a second PUCCH resource set based on the number of bits of the first UCI, where the second PUCCH resource set belongs to the one or more second-type PUCCH resource sets, and the second PUCCH resource belongs to the second PUCCH resource set.

In a possible implementation, the apparatus further includes:
a processing unit 102, configured to determine the first PUCCH resource in the first PUCCH resource set based on a first PUCCH resource indicator field in downlink control information DCI sent by the network device, and determine the second PUCCH resource in the second PUCCH resource set, where the first PUCCH resource set belongs to the one or more first-type PUCCH resource sets, and the second PUCCH resource set belongs to the one or more second-type PUCCH resource sets.

In a possible implementation, the apparatus further includes:

> a processing unit 102, configured to determine the first PUCCH resource in the first PUCCH resource set based on a first PUCCH resource indicator field in DCI sent by the network device, where the first PUCCH resource set belongs to the one or more first-type PUCCH resource sets; and
> determine the second PUCCH resource in the second PUCCH resource set based on a second PUCCH resource indicator field in the DCI, where the second PUCCH resource set belongs to the one or more second-type PUCCH resource sets.

In a possible implementation, the receiving unit 101 is further configured to receive a seventh message sent by the network device, where the seventh message indicates the first PUCCH resource and the second PUCCH resource, and the seventh message indicates the terminal device to transmit the first UCI on the first PUCCH resource and the second PUCCH resource.

In a possible implementation, the receiving unit 101 is further configured to receive a third message sent by the network device, where the third message indicates a reference signal associated with the first PUCCH resource and a reference signal associated with the second PUCCH resource.

In a possible implementation, the receiving unit 101 is further configured to receive a third message and a fourth message that are sent by the network device, where the third message indicates a reference signal associated with the first PUCCH resource, and the fourth message indicates a reference signal associated with the second PUCCH resource.

In a possible implementation, the reference signal associated with the first PUCCH resource is the same as a reference signal associated with a first physical downlink control channel PDCCH that is received by the terminal device in an SBFD time unit, and the first PDCCH is received by the terminal device in a control resource set CORESET with a smallest index value in an active downlink bandwidth part BWP corresponding to the SBFD time unit; and

the reference signal associated with the second PUCCH resource is the same as a reference signal associated with a second PDCCH that is received by the terminal device in a non-SBFD time unit, and the second PDCCH is received by the terminal device in a CORESET with a smallest index value in an active downlink BWP corresponding to the non-SBFD time unit.

In a possible implementation, a frequency range associated with the SBFD time unit includes one or more uplink subbands and one or more downlink subbands, the uplink subband is used for uplink transmission, the downlink subband is used for downlink transmission, and a frequency range associated with the non-SBFD time unit is used for uplink transmission or downlink transmission.

In a possible implementation, a frequency domain resource of each PUCCH resource in the one or more first-type PUCCH resources is within a frequency range of an uplink subband associated with the SBFD time unit.

In a possible implementation, the first PUCCH resource meets any one or more of the following conditions:

a time domain resource length of the first PUCCH resource is greater than a time domain resource length of the second PUCCH resource;
a frequency domain resource width of the first PUCCH resource is greater than a frequency domain resource width of the second PUCCH resource;
a maximum coding rate of the first PUCCH resource is less than a maximum coding rate of the second PUCCH resource; or
a number of demodulation reference signal DMRS symbols of the first PUCCH resource is greater than a number of DMRS symbols of the second PUCCH resource.

In a possible design, when the communication apparatus 10 is configured to implement functions of the network device in FIG. 10, the communication apparatus 10 may be one of 110a and 110b shown in FIG. 2a, or may be a module (for example, a chip) used in the network device. Functions of units are as follows:

The sending unit 100 is configured to send a fifth message to a terminal device, where the fifth message indicates one or more PUCCH resources, and the one or more PUCCH resources are used to send UCI in an SBFD time unit and a non-SBFD time unit.

The receiving unit 101 is configured to receive, in the SBFD time unit on a third PUCCH resource, second UCI repeatedly transmitted by the terminal device N times.

The receiving unit 101 is further configured to receive, in the non-SBFD time unit on the third PUCCH resource, the second UCI repeatedly transmitted by the terminal device M times, where
the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

In a possible implementation, the sending unit 100 is further configured to send a sixth message, where the sixth message indicates a spatial relationship corresponding to the third PUCCH resource in the SBFD time unit and a spatial relationship corresponding to the third PUCCH resource in the non-SBFD time unit.

In a possible implementation, the sending unit 100 is further configured to send an eighth message, where the eighth message indicates one or more PUCCH resource sets, and any one of the one or more PUCCH resource sets includes one or more of the one or more PUCCH resources.

In a possible design, when the communication apparatus 10 is configured to implement functions of the UE in FIG. 6c, the communication apparatus 10 may be one of the terminals 120a to 120j shown in FIG. 2a, or may be a module (for example, a chip) used in the terminal. Functions of units are as follows:

The receiving unit 101 is configured to receive a fifth message from a network device, where the fifth message indicates one or more PUCCH resources, and the one or more PUCCH resources are used to send UCI in an SBFD time unit and a non-SBFD time unit.

The sending unit 100 is configured to repeatedly transmit second UCI N times in the SBFD time unit on a third PUCCH resource.

The sending unit 100 is further configured to repeatedly transmit the second UCI M times in the non-SBFD time unit on the third PUCCH resource, where
the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

In a possible implementation, the receiving unit 101 is further configured to receive a sixth message, where the sixth message indicates spatial relationship information corresponding to the third PUCCH resource in the SBFD time unit and spatial relationship information corresponding to the third PUCCH resource in the non-SBFD time unit.

In a possible implementation, the receiving unit 101 is further configured to receive an eighth message, where the eighth message indicates one or more PUCCH resource sets, and any one of the one or more PUCCH resource sets includes one or more of the one or more PUCCH resources.

It should be noted that, for functions of functional units/modules of the communication apparatus described in embodiments of this application, refer to the related descriptions in the foregoing method embodiments. Details are not described herein again.

It may be understood that specific descriptions of the receiving unit, the sending unit, and the processing unit shown in the foregoing apparatus embodiments are merely examples. For specific functions, performed steps, or the like of the receiving unit, the sending unit, and the processing unit, refer to the descriptions of any one of the method embodiments in FIG. 6a to FIG. 6c or FIG. 10. Details are not described herein again.

The foregoing describes the communication apparatus in embodiments of this application, and the following describes a possible product form of the communication apparatus. It should be understood that a product in any form that has a function of the communication apparatus in FIG. 11 falls within the protection scope of embodiments of this application. It should be further understood that the following description is merely an example, and does not limit a product form of the communication apparatus in embodiments of this application.

In a possible implementation, in the communication apparatus shown in FIG. 11, the processing unit 102 (not shown in FIG. 11) may be one or more processors; the sending unit 100 and the receiving unit 101 may be a transceiver; or the sending unit 100 may be a transmitter, and the receiving unit 101 may be a receiver. In embodiments of this application, the processor and the transceiver may be coupled, or the like. A manner of a connection between the processor and the transceiver is not limited in embodiments of this application. In a process of performing the foregoing method, a process of sending information in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Still further, after the transceiver receives the information, other processing may need to be performed on the information before the information is input into the processor.

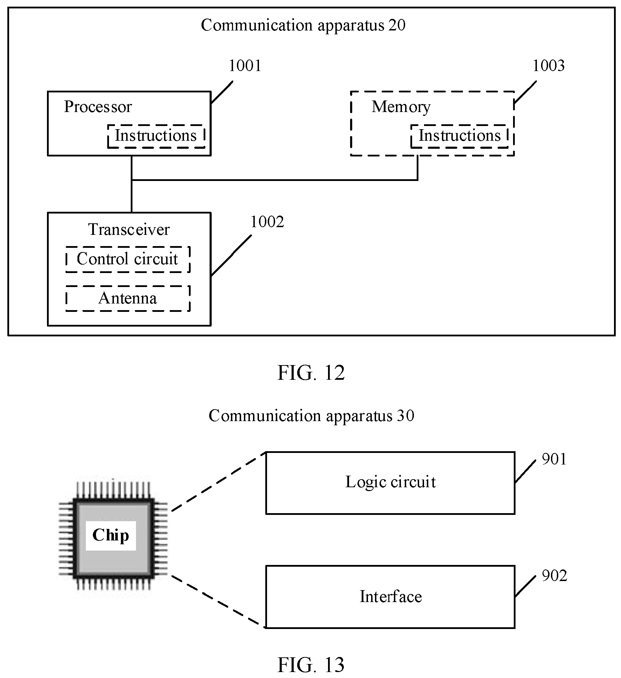

FIG. 12 is a diagram of a structure of another communication apparatus according to an embodiment of this application. The communication apparatus 20 may be the communication apparatus 10 or a chip in the communication apparatus 10. FIG. 12 shows only main components of the communication apparatus 20. In addition to a processor 1001 and a transceiver 1002, the communication apparatus 20 may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1001, the transceiver 1002, and the memory 1003 may be connected through a communication bus.

For example, when the communication apparatus 20 is configured to perform the step, the method, or the function of the network device in FIG. 6a performed by the communication apparatus 10, the transceiver 1002 is configured to send a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit. The transceiver 1002 is further configured to receive, on a first PUCCH resource in the one or more first-type PUCCH resources and/or a second PUCCH resource in the one or more second-type PUCCH resources, first UCI sent by the terminal device. Optionally, the processor 1001 may be configured to generate a message sent by the transceiver 1002 or process a message received by the transceiver 1002.

For example, when the communication apparatus 20 is configured to perform the step, the method, or the function of the network device in FIG. 6b performed by the communication apparatus 10, the transceiver 1002 is configured to send a first message to a terminal device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit. The transceiver 1002 is further configured to receive, on a first PUCCH resource in the one or more first-type PUCCH resources and/or a second PUCCH resource in the one or more second-type PUCCH resources, first UCI sent by the terminal device. Optionally, the processor 1001 may be configured to generate a message sent by the transceiver 1002 or process a message received by the transceiver 1002.

For example, when the communication apparatus 20 is configured to perform the step, the method, or the function of the network device in FIG. 6c performed by the communication apparatus 10, the transceiver 1002 is configured to send a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit. The transceiver 1002 is further configured to receive, on a first PUCCH resource in the one or more first-type PUCCH resources and/or a second PUCCH resource in the one or more second-type PUCCH resources, first UCI sent by the terminal device. Optionally, the processor 1001 may be configured to generate a message sent by the transceiver 1002 or process a message received by the transceiver 1002.

For example, when the communication apparatus 20 is configured to perform the step, the method, or the function of the UE in FIG. 6a performed by the communication apparatus 10, the transceiver 1002 is configured to receive a first message from a network device, where the first message indicates one or more first-type PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used to send uplink control information UCI in a subband full duplex SBFD time unit, and the one or more second-type PUCCH resources are used to send UCI in a non-subband full duplex non-SBFD time unit. The transceiver 1002 is further configured to send first UCI on a first PUCCH resource in the one or more first-type PUCCH resources and/or a second PUCCH resource in the one or more second-type PUCCH resource sets. Optionally, the processor 1001 may be configured to generate a message sent by the transceiver 1002 or process a message received by the transceiver 1002.

For example, when the communication apparatus 20 is configured to perform the step, the method, or the function of the UE in FIG. 6b performed by the communication apparatus 10, the transceiver 1002 is configured to receive a first message from a network device, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit. The transceiver 1002 is further configured to send first UCI on a first PUCCH resource in the one or more first-type PUCCH resources and/or a second PUCCH resource in the one or more second-type PUCCH resource sets. Optionally, the processor 1001 may be configured to generate a message sent by the transceiver 1002 or process a message received by the transceiver 1002.

For example, when the communication apparatus 20 is configured to perform the step, the method, or the function of the UE in FIG. 6c performed by the communication apparatus 10, the transceiver 1002 is configured to receive a first message from a network device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit. The transceiver 1002 is further configured to send first UCI on a first PUCCH resource in the one or more first-type PUCCH resources and/or a second PUCCH resource in the one or more second-type PUCCH resource sets. Optionally, the processor 1001 may be configured to generate a message sent by the transceiver 1002 or process a message received by the transceiver 1002.

For example, when the communication apparatus 20 is configured to perform the step, the method, or the function of the network device in FIG. 10 performed by the communication apparatus 10, the transceiver 1002 is configured to send a fifth message to a terminal device, where the fifth message indicates one or more PUCCH resources, and the one or more PUCCH resources are used to send UCI in an SBFD time unit and a non-SBFD time unit. The transceiver 1002 is further configured to receive, in the SBFD time unit on a third PUCCH resource, second UCI repeatedly transmitted by the terminal device N times. The transceiver 1002 is further configured to receive, in the non-SBFD time unit on the third PUCCH resource, the second UCI repeatedly transmitted by the terminal device M times, where the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource. Optionally, the processor 1001 may be configured to generate a message sent by the transceiver 1002 or process a message received by the transceiver 1002.

For example, when the communication apparatus 20 is configured to perform the step, the method, or the function of the UE in FIG. 10 performed by the communication apparatus 10, the transceiver 1002 receives a fifth message from a network device, where the fifth message indicates one or more PUCCH resources, and the one or more PUCCH resources are used to send UCI in an SBFD time unit and a non-SBFD time unit. The transceiver 1002 is further configured to repeatedly transmit second UCI N times in the SBFD time unit on a third PUCCH resource. The transceiver 1002 is further configured to repeatedly transmit the second UCI M times in the non-SBFD time unit on the third PUCCH resource, where the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource. Optionally, the processor 1001 may be configured to generate a message sent by the transceiver 1002 or process a message received by the transceiver 1002.

It may be understood that for specific descriptions of the processor and the transceiver, refer to the descriptions of the processing unit, the receiving unit, and the sending unit in the apparatus embodiment in FIG. 11. Details are not described herein again.

Optionally, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 1001 may store instructions. The instructions may be a computer program. The computer program is run on the processor 1001, to enable the communication apparatus 20 to perform the method described in the foregoing method embodiments. The computer program may be solidified in the processor 1001. In this case, the processor 1001 may be implemented by hardware.

In an implementation, the communication apparatus 20 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further have more components and the like than those in FIG. 8. This is not limited in this embodiment of this application. The foregoing method performed by the processor and the transceiver is merely an example. For specific steps performed by the processor and the transceiver, refer to the descriptions in the foregoing method embodiments.

In another possible implementation, in the communication apparatus in FIG. 11, the processing unit 102 may be one or more logic circuits; and the sending unit 100 and the receiving unit 101 may be an input/output interface, also referred to as a communication interface, an interface circuit, an interface, or the like. Alternatively, the sending unit may be an output interface, and the receiving unit may be an input interface. Alternatively, the sending unit and the receiving unit are integrated into one unit, for example, an input/output interface. FIG. 13 is a diagram of a structure of still another communication apparatus according to an embodiment of this application. As shown in FIG. 13, the communication apparatus 30 includes a logic circuit 901 and an interface 902. In other words, the processing unit 102 may be implemented by using the logic circuit 901, and the sending unit 100 and the receiving unit 101 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 13 is shown by using an example in which the communication apparatus 30 is a chip. The chip includes the logic circuit 901 and the interface 902.

In this embodiment of this application, the logic circuit may be further coupled to the interface. A specific connection manner of the logical circuit and the interface is not limited in this embodiment of this application.

The communication apparatus 30 may be configured to perform the methods, the functions, or the steps of the network device or the UE in FIG. 6a to FIG. 6c or FIG. 10 performed by the communication apparatus 10.

For example, when the communication apparatus 30 is configured to perform the method, the function, or the step of the network device in FIG. 6a performed by the communication apparatus 10, the interface 902 is configured to send a first message to a terminal device, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit. The interface 902 is further configured to receive, on a first PUCCH resource in the one or more first-type PUCCH resources and/or a second PUCCH resource in the one or more second-type PUCCH resources, first UCI sent by the terminal device. Optionally, the logic circuit 901 may be configured to generate a message sent by the interface 902 or process a message received by the interface 902.

It may be understood that the communication apparatus 30 may also perform the method, the function, or the step of the UE in FIG. 6a performed by the communication apparatus 10, and may perform the method, the function, or the step of the network device or the UE in FIG. 6b, FIG. 6c, or FIG. 10 performed by the communication apparatus 10. For related descriptions of the logic circuit 901 and the interface 902, refer to the related descriptions of the method, the function, or the step of the network device in FIG. 6a performed by the communication apparatus 20 and the communication apparatus 30. Details are not described herein again.

It may be understood that for specific descriptions of the logic circuit 901 and the interface 902, refer to the descriptions of the processing unit, the sending unit, and the receiving unit in the apparatus embodiment in FIG. 11. Details are not described herein again.

It may be understood that the communication apparatus shown in embodiments of this application may implement the method provided in embodiments of this application in a form of hardware, or may implement the method provided in embodiments of this application in a form of software, or the like. This is not limited in embodiments of this application.

For specific implementations of the embodiment shown in FIG. 13, refer to the foregoing embodiments. Details are not described herein again.

An embodiment of this application further provides a wireless communication system. The wireless communication system includes a UE and a network device. The UE and the network device may be configured to perform the method in any embodiment (in FIG. 6a, FIG. 6b, FIG. 6c, or FIG. 10).

In addition, this application further provides a computer program. The computer program is used to implement operations and/or processing performed by the communication apparatus 10, the communication apparatus 20, and the communication apparatus 30 in the methods provided in this application.

This application further provides a readable storage medium. The readable storage medium stores computer code. When the computer code is run on a computer, the computer is enabled to perform operations and/or processing performed by the communication apparatus 10, the communication apparatus 20, and the communication apparatus 30 in the methods provided in this application.

This application further provides a computer program product. The computer program product includes computer code or a computer program. When the computer code or the computer program is run on a computer, operations and/or processing performed by the communication apparatus 10, the communication apparatus 20, and the communication apparatus 30 in the methods provided in this application are/is performed.

An embodiment of this application further provides a chip system. The chip system includes a processor, configured to support a device in implementing a function in any embodiment (in FIG. 6a, FIG. 6b, FIG. 6c, or FIG. 10), for example, generating or processing information in the foregoing communication method. In a possible design, the chip system further includes a memory, and the memory is configured to store program instructions and data that are necessary for the device. The chip system may include a chip, or may include a chip and another discrete component.

In the foregoing embodiments, the descriptions of each embodiment have respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to preferable embodiments, and the related actions and modules are not necessarily required by this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of software product. The computer software product is stored in a readable storage medium and includes several instructions for instructing a computer device (which may be a personal computer, a server, a network device, or the like) to perform all or some of the steps in the method described in embodiments of this application. The foregoing readable storage medium includes: various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, applied to a network device, wherein the method comprises:

   sending a first message to a terminal device, wherein the first message indicates one or more first-type physical uplink control channel PUCCH resource sets and one or more second-type PUCCH resource sets, the one or more first-type PUCCH resource sets comprise one or more first-type PUCCH resources, the one or more second-type PUCCH resource sets comprise one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and
   receiving, on a first PUCCH resource in the one or more first-type PUCCH resources and/or a second PUCCH resource in the one or more second-type PUCCH resources, first UCI sent by the terminal device.

2. A communication method, applied to a network device, wherein the method comprises:

   sending a first message to a terminal device, wherein the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and

receiving, on a first PUCCH resource in the one or more first-type PUCCH resources and/or a second PUCCH resource in the one or more second-type PUCCH resources, first UCI sent by the terminal device.

3. The method according to claim 2, wherein the method further comprises:
sending a second message to the terminal device, wherein the second message indicates one or more first-type physical uplink control channel PUCCH resource sets and one or more second-type PUCCH resource sets, any PUCCH resource set in the one or more first-type PUCCH resource sets comprises one or more PUCCH resources in the one or more first-type PUCCH resources, and any PUCCH resource set in the one or more second-type PUCCH resource sets comprises one or more PUCCH resources in the one or more second-type PUCCH resources.

4. A communication method, applied to a network device, wherein the method comprises:

   sending a first message to a terminal device, wherein the first message indicates one or more first-type physical uplink control channel PUCCH resource sets and one or more second-type PUCCH resource sets, the one or more first-type PUCCH resource sets comprise one or more first-type PUCCH resources, the one or more second-type PUCCH resource sets comprise one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit; and
   receiving, on a first PUCCH resource in the one or more first-type PUCCH resources and/or a second PUCCH resource in the one or more second-type PUCCH resources, first UCI sent by the terminal device.

5. The method according to any one of claims 1 to 4, wherein the method further comprises:

   receiving, on the first PUCCH resource corresponding to the SBFD time unit, the first UCI repeatedly transmitted by the terminal device N times, wherein the first PUCCH resource belongs to the one or more first-type PUCCH resources; and
   receiving, on the second PUCCH resource corresponding to the non-SBFD time unit, the first UCI repeatedly transmitted by the terminal device M times, wherein the second PUCCH resource belongs to the one or more second-type PUCCH resources, and both M and N are integers greater than 0.

6. The method according to any one of claims 1 to 5, wherein the method further comprises:

   receiving the first UCI on the first PUCCH resource in a first PUCCH resource set, wherein the first PUCCH resource set belongs to the one or more first-type PUCCH resource sets; and
   receiving the first UCI on the second PUCCH resource in a second PUCCH resource set, wherein the second PUCCH resource set belongs to the one or more second-type PUCCH resource sets.

7. The method according to any one of claims 1 to 6, wherein the method further comprises:
sending downlink control information DCI, wherein the DCI comprises a first PUCCH resource indicator field, and the first PUCCH resource indicator field is for determining the first PUCCH resource and the second PUCCH resource.

8. The method according to any one of claims 1 to 6, wherein the method further comprises:
sending downlink control information DCI, wherein the DCI comprises a first PUCCH resource indicator field and a second PUCCH indicator field, the first PUCCH resource indicator field is for determining the first PUCCH resource, and the second PUCCH resource indicator field is for determining the second PUCCH resource.

9. The method according to any one of claims 1 to 5, wherein the method further comprises:
sending a seventh message, wherein the seventh message indicates the first PUCCH resource and the second PUCCH resource, and the seventh message indicates the terminal device to transmit the first UCI on the first PUCCH resource and the second PUCCH resource.

10. The method according to any one of claims 1 to 9, wherein the method further comprises:
sending a third message, wherein the third message indicates a reference signal associated with the first PUCCH resource and a reference signal associated with the second PUCCH resource.

11. The method according to any one of claims 1 to 9, wherein the method further comprises:
sending a third message and a fourth message, wherein the third message indicates a reference signal associated with the first PUCCH resource, and the fourth message indicates a reference signal associated with the second PUCCH resource.

12. A communication method, applied to a terminal device, wherein the method comprises:

receiving a first message from a network device, wherein the first message indicates one or more first-type PUCCH resource sets and one or more second-type PUCCH resource sets, the one or more first-type PUCCH resource sets comprise one or more first-type PUCCH resources, the one or more second-type PUCCH resource sets comprise one or more second-type PUCCH resources, the one or more first-type PUCCH resources are used to send uplink control information UCI in a subband full duplex SBFD time unit, and the one or more second-type PUCCH resources are used to send UCI in a non-subband full duplex non-SBFD time unit; and
sending first UCI on a first PUCCH resource in the one or more first-type PUCCH resources and/or a second PUCCH resource in the one or more second-type PUCCH resource sets.

13. A communication method, applied to a terminal device, wherein the method comprises:

receiving a first message from a network device, wherein the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit; and
sending first UCI on a first PUCCH resource in the one or more first-type PUCCH resources and/or a second PUCCH resource in the one or more second-type PUCCH resource sets.

14. The method according to claim 13, wherein the method further comprises:
receiving a second message from the network device, wherein the second message indicates one or more first-type physical uplink control channel PUCCH resource sets and one or more second-type PUCCH resource sets, any PUCCH resource set in the one or more first-type PUCCH resource sets comprises one or more PUCCH resources in the one or more first-type PUCCH resources, and any PUCCH resource set in the one or more second-type PUCCH resource sets comprises one or more PUCCH resources in the one or more second-type PUCCH resources.

15. A communication method, applied to a terminal device, wherein the method comprises:

receiving a first message from a network device, wherein the first message indicates one or more first-type physical uplink control channel PUCCH resource sets and one or more second-type PUCCH resource sets, the one or more first-type PUCCH resource sets comprise one or more first-type PUCCH resources, the one or more second-type PUCCH resource sets comprise one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit; and
sending first UCI on a first PUCCH resource in the one or more first-type PUCCH resources and/or a second PUCCH resource in the one or more second-type PUCCH resource sets.

16. The method according to any one of claims 12 to 15, wherein the method further comprises:

repeatedly transmitting the first UCI N times on the first PUCCH resource corresponding to the SBFD time unit, wherein the first PUCCH resource belongs to the one or more first-type PUCCH resources; and
repeatedly transmitting the first UCI M times on the second PUCCH resource corresponding to the non-SBFD time unit, wherein the second PUCCH resource belongs to the one or more second-type PUCCH resources, and both M and N are integers greater than 0.

17. The method according to any one of claims 12 to 16, wherein the first UCI comprises hybrid automatic repeat-acknowledgment HARQ-RACK information, and the method further comprises:

determining a first PUCCH resource set based on a number of bits of the first UCI, wherein the first PUCCH resource set belongs to the one or more first-type PUCCH resource sets, and the first PUCCH resource belongs to the first PUCCH resource set; and

determining a second PUCCH resource set based on the number of bits of the first UCI, wherein the second PUCCH resource set belongs to the one or more second-type PUCCH resource sets, and the second PUCCH resource belongs to the second PUCCH resource set.

18. The method according to any one of claims 12 to 17, wherein the method further comprises:
determining the first PUCCH resource in the first PUCCH resource set based on a first PUCCH resource indicator field in downlink control information DCI sent by the network device, and determining the second PUCCH resource in the second PUCCH resource set, wherein the first PUCCH resource set belongs to the one or more first-type PUCCH resource sets, and the second PUCCH resource set belongs to the one or more second-type PUCCH resource sets.

19. The method according to any one of claims 12 to 17, wherein the method further comprises:

determining the first PUCCH resource in the first PUCCH resource set based on a first PUCCH resource indicator field in DCI sent by the network device, wherein the first PUCCH resource set belongs to the one or more first-type PUCCH resource sets; and

determining the second PUCCH resource in the second PUCCH resource set based on a second PUCCH resource indicator field in the DCI, wherein the second PUCCH resource set belongs to the one or more second-type PUCCH resource sets.

20. The method according to any one of claims 12 to 16, wherein the method further comprises:
receiving a seventh message sent by the network device, wherein the seventh message indicates the first PUCCH resource and the second PUCCH resource, and the seventh message indicates the terminal device to transmit the first UCI on the first PUCCH resource and the second PUCCH resource.

21. The method according to any one of claims 12 to 20, wherein
receiving a third message sent by the network device, wherein the third message indicates a reference signal associated with the first PUCCH resource and a reference signal associated with the second PUCCH resource.

22. The method according to any one of claims 12 to 20, wherein
receiving a third message and a fourth message that are sent by the network device, wherein the third message indicates a reference signal associated with the first PUCCH resource, and the fourth message indicates a reference signal associated with the second PUCCH resource.

23. The method according to any one of claims 1 to 22, wherein the reference signal associated with the first PUCCH resource is the same as a reference signal associated with a first physical downlink control channel PDCCH that is received by the terminal device in an SBFD time unit, and the first PDCCH is received by the terminal device in a control resource set CORESET with a smallest index value in an active downlink bandwidth part BWP corresponding to the SBFD time unit; and
the reference signal associated with the second PUCCH resource is the same as a reference signal associated with a second PDCCH that is received by the terminal device in a non-SBFD time unit, and the second PDCCH is received by the terminal device in a CORESET with a smallest index value in an active downlink BWP corresponding to the non-SBFD time unit.

24. The method according to any one of claims 1 to 23, wherein a frequency range associated with the SBFD time unit comprises one or more uplink subbands and one or more downlink subbands, the uplink subband is used for uplink transmission, the downlink subband is used for downlink transmission, and a frequency range associated with the non-SBFD time unit is used for uplink transmission or downlink transmission.

25. The method according to any one of claims 1 to 24, wherein a frequency domain resource of each PUCCH resource in the one or more first-type PUCCH resources is within a frequency range of an uplink subband associated with the SBFD time unit.

26. The method according to any one of claims 1 to 25, wherein the first PUCCH resource meets any one or more of the following conditions:

a time domain resource length of the first PUCCH resource is greater than a time domain resource length of the second PUCCH resource;

a frequency domain resource width of the first PUCCH resource is greater than a frequency domain resource width of the second PUCCH resource;

a maximum coding rate of the first PUCCH resource is less than a maximum coding rate of the second PUCCH resource; or

a number of demodulation reference signal DMRS symbols of the first PUCCH resource is greater than a number of DMRS symbols of the second PUCCH resource.

27. A communication method, applied to a network device, wherein the method comprises:

sending a fifth message to a terminal device, wherein the fifth message indicates one or more PUCCH resources, and the one or more PUCCH resources are used to send UCI in an SBFD time unit and a non-SBFD time unit;

receiving, in the SBFD time unit on a third PUCCH resource, second UCI repeatedly transmitted by the terminal device N times; and

receiving, in the non-SBFD time unit on the third PUCCH resource, the second UCI repeatedly transmitted by the terminal device M times, wherein

the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

28. The method according to claim 27, wherein the method further comprises:
sending a sixth message, wherein the sixth message indicates a spatial relationship corresponding to the third PUCCH resource in the SBFD time unit and a spatial relationship corresponding to the third PUCCH resource in the non-SBFD time unit.

29. The method according to claim 27 or 28, wherein the method further comprises:
sending an eighth message, wherein the eighth message indicates one or more PUCCH resource sets, and any one of the one or more PUCCH resource sets comprises one or more of the one or more PUCCH resources.

30. A communication method, applied to a terminal device, wherein the method comprises:

receiving a fifth message from a network device, wherein the fifth message indicates one or more PUCCH resources, and the one or more PUCCH resources are used to send UCI in an SBFD time unit and a non-SBFD time unit;

repeatedly transmitting second UCI N times in the SBFD time unit on a third PUCCH resource; and

repeatedly transmitting the second UCI M times in the non-SBFD time unit on the third PUCCH resource, wherein the third PUCCH resource belongs to the one or more PUCCH resources, both M and N are integers greater than 0, a same spatial relationship is applied for N times of repeated transmission in the SBFD time unit on the third PUCCH resource, and a same spatial relationship is applied for M times of repeated transmission in the non-SBFD time unit on the third PUCCH resource.

31. The method according to claim 30, wherein the method further comprises:
receiving a sixth message, wherein the sixth message indicates spatial relationship information corresponding to the third PUCCH resource in the SBFD time unit and spatial relationship information corresponding to the third PUCCH resource in the non-SBFD time unit.

32. The method according to claim 30 or 31, wherein the method further comprises:
receiving an eighth message, wherein the eighth message indicates one or more PUCCH resource sets, and any one of the one or more PUCCH resource sets comprises one or more of the one or more PUCCH resources.

33. A communication apparatus, comprising a module or a unit configured to perform the method according to any one of claims 1 to 32.

34. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 32 by using a logic circuit or by executing code instructions.

**35.** A computer-readable storage medium, wherein the storage medium stores a computer program or instructions; and when the computer program or the instructions are executed by a communication apparatus, the method according to any one of claims 1 to 32 is implemented.

**36.** A computer program, wherein the computer program comprises instructions, and when the computer program is executed by a communication apparatus, the method according to any one of claims 1 to 32 is implemented.

**37.** A chip system, wherein the chip system comprises a processor configured to support a device in implementing a function related to the method according to any one of claims 1 to 32.

Frequency (f)

FIG. 1

FIG. 2a

Base station

Relay UE     Remote UE

FIG. 2b

Relay UE

Source UE

Target UE

Sidelink coverage extension
SL coverage extension

FIG. 2c

Network device

UL        DL

Terminal device #0        Terminal device #1

Frequency (f)

| | SBFD time unit | Non-SBFD time unit |
|---|---|---|

| 1 CC | Downlink (DL) | | |
|---|---|---|---|
| | Uplink (UL) | Uplink (UL) | Downlink (DL) |
| | Downlink (DL) | | |

Time (t)

FIG. 2d

Base station — 110

111

Interface (interface)

112

114

Processor (processor)

Program/Program

113

115

Memory (memory)

Program/Program

UE — 120

Interface (interface)

121

Processor (processor)

Program/Program

122

124

Memory (memory)

Program/Program

123

125

FIG. 3

Frequency (f)

SBFD time unit                    Non-SBFD time unit

1 CC

Subband 0-downlink (DL)
Subband 1-uplink (UL)
Subband 2-downlink (DL)

Uplink (UL)

Downlink (DL)

Time unit 1           Time unit 2    Time unit 3    Time (t)

FIG. 4

EP 4 750 195 A1

PUCCH format 0

PUCCH format 1

PUCCH format 2

PUCCH format 3

PUCCH format 4

1 symbol and 2 symbols

4 symbols to 14 symbols

≤2 bits

>2 bits

Ouci≤2

PUCCH resource #31

PUCCH resource #30

...

PUCCH resource #0

PUCCH resource set #0

2<Ouci≤N2

PUCCH resource #7

PUCCH resource #6

...

PUCCH resource #0

PUCCH resource set #1

N2<Ouci≤N3

PUCCH resource #7

PUCCH resource #6

...

PUCCH resource #0

PUCCH resource set #2

N3<Ouci≤1706

PUCCH resource #7

PUCCH resource #6

...

PUCCH resource #0

PUCCH resource set #3

FIG. 5

Network
device

UE

S601: Send a first message, where the first message indicates one or more first-type PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit

S602: Receive first UCI on a first PUCCH resource in the one or more first-type PUCCH resources and/or a second PUCCH resource in the one or more second-type PUCCH resources

FIG. 6a

Network
device

UE

S611: Send a first message, where the first message indicates one or more first-type physical uplink control channel PUCCH resources and one or more second-type PUCCH resources, the one or more first-type PUCCH resources are used by the terminal device to send uplink control information UCI in a subband full duplex SBFD time unit, and the one or more second-type PUCCH resources are used by the terminal device to send UCI in a non-subband full duplex non-SBFD time unit

S612: Receive first UCI on a first PUCCH resource in the one or more first-type PUCCH resources and/or a second PUCCH resource in the one or more second-type PUCCH resources

FIG. 6b

```
┌─────────────┐                                              ┌─────────┐
│  Network    │                                              │   UE    │
│  device     │                                              │         │
└──────┬──────┘                                              └────┬────┘
```

S621: Send a first message, where the first message indicates one or more first-type physical uplink control channel PUCCH resource sets and one or more second-type PUCCH resource sets, the one or more first-type PUCCH resource sets include one or more first-type PUCCH resources, the one or more second-type PUCCH resource sets include one or more second-type PUCCH resources, the one or more first-type PUCCH resource sets are used by the terminal device to send uplink control information UCI in a subband full duplex SBFD time unit, and the one or more second-type PUCCH resource sets are used by the terminal device to send UCI in a non-subband full duplex non-SBFD time unit

S622: Receive first UCI on a first PUCCH resource in the one or more first-type PUCCH resources and/or a second PUCCH resource in the one or more second-type PUCCH resources

FIG. 6c

| Ouci≤2 | Nx<Ouci≤Nx+1 | Ouci≤2 | Ny<Ouci≤Ny+1 |
|---|---|---|---|
| PUCCH resource #31 | PUCCH resource #7 | PUCCH resource #31 | PUCCH resource #7 |
| PUCCH resource #30 | PUCCH resource #6 | PUCCH resource #30 | PUCCH resource #6 |
| ... | ... | ... | ... |
| PUCCH resource #0 | PUCCH resource #0 | PUCCH resource #0 | PUCCH resource #0 |

PUCCH resource set #0     PUCCH resource set #X       PUCCH resource set #0     PUCCH resource set #Y

PUCCH resource set dedicated to an SBFD time unit

PUCCH resource set dedicated to a non-SBFD time unit

FIG. 7

EP 4 750 195 A1

FIG. 8

(M+N) times of repeated transmission

| PUCCH resource #X | PUCCH resource #X | PUCCH resource #Y | PUCCH resource #Y | PUCCH resource #X | PUCCH resource #X |

| SBFD time unit | SBFD time unit | Non-SBFD time unit | Non-SBFD time unit | SBFD time unit | SBFD time unit |

M times of repeated transmission

FIG. 9

Network device

UE

S701: Send a fifth message, where the fifth message indicates one or more PUCCH resources, and the one or more PUCCH resources are used by the terminal device to send UCI in an SBFD time unit and a non-SBFD time unit

S702: Receive, in the SBFD time unit on a third PUCCH resource, second UCI repeatedly transmitted by the terminal device N times, and receive, in the non-SBFD time unit on the third PUCCH resource, the second UCI repeatedly transmitted by the terminal device M times, where the third PUCCH resource belongs to the one or more PUCCH resources, both M and N are integers greater than 0, a same spatial relationship is applied for each time of transmission when the second UCI is repeatedly transmitted N times in the SBFD time unit on the third PUCCH resource, and a same spatial relationship is applied for each time of transmission when the second UCI is repeatedly transmitted M times in the non-SBFD time unit on the third PUCCH resource

**FIG. 10**

Communication apparatus 10

Sending unit 100

Receiving unit 101

**FIG. 11**

Communication apparatus 20

1001

Processor

Instructions

1003

Memory

Instructions

Transceiver

Control circuit

Antenna

1002

FIG. 12

Communication apparatus 30

Chip

Logic circuit

901

Interface

902

FIG. 13

## INTERNATIONAL SEARCH REPORT

| International application No. |
| --- |
| **PCT/CN2024/110897** |

| A. | CLASSIFICATION OF SUBJECT MATTER |
| --- | --- |

H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, WPABSC, ENTXT, 3GPP: 子带全双工, 非子带全双工, 物理上行控制信道, 物理上行链路控制信道, 上行控制信息, 上行链路控制信息, 资源集, 资源, 指示, 重复, SBFD, non-SBFD, PUCCH, UCI, resource, set, indicate, repetition

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115699667 A (QUALCOMM INC.) 03 February 2023 (2023-02-03) description, paragraphs [0074]-[0125], figures 1-17, and claims 1-30 | 1-37 |
| A | CN 116567850 A (HUAWEI TECHNOLOGIES CO., LTD.) 08 August 2023 (2023-08-08) entire document | 1-37 |
| A | WO 2023123334 A1 (LENOVO (BEIJING) LTD.) 06 July 2023 (2023-07-06) entire document | 1-37 |
| A | HUAWEI et al. "Discussion on Potential Enhancement on Subband Non-Overlapping Full Duplex" *3GPP TSG-RAN WG1 Meeting #112bis-e, R1-2302348*, 26 April 2023 (2023-04-26), entire document | 1-37 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 November 2024** | **20 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/110897**

| Patent document cited in search report | | | Publication date (day/month/year) | Patent family member(s) | | | Publication date (day/month/year) |
|---|---|---|---|---|---|---|---|
| CN | 115699667 | A | 03 February 2023 | EP | 4165818 | A1 | 19 April 2023 |
| | | | | US | 2021392666 | A1 | 16 December 2021 |
| | | | | WO | 2021258093 | A1 | 23 December 2021 |
| CN | 116567850 | A | 08 August 2023 | WO | 2023143054 | A1 | 03 August 2023 |
| | | | | EP | 4456647 | A1 | 30 October 2024 |
| WO | 2023123334 | A1 | 06 July 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311019855